# EUROPÄISCHE PATENTSCHRIFT

(11) **EP 3 519 903 B1**
(45) Veröffentlichungstag und Bekanntmachung des Hinweises auf die Patenterteilung: **25.08.2021**
(21) Anmeldenummer: 18705390.5
(22) Anmeldetag: 14.02.2018
(51) Int. Cl.: G05B 19/418

(54) **DATENSCHNITTSTELLENVORRICHTUNG ZUM EINSATZ AN EINER NUMERISCH GESTEUERTEN WERKZEUGMASCHINE**
DATA INTERFACE DEVICE FOR USE ON A NUMERICALLY CONTROLLED MACHINE TOOL
DISPOSITIF D'INTERFACE DE DONNÉES À UTILISER DANS UNE MACHINE-OUTIL À COMMANDE NUMÉRIQUE

(30) Priorität: 14.02.2017 DE 102017202360
(43) Veröffentlichungstag der Anmeldung: 07.08.2019
(73) Patentinhaber: DECKEL MAHO Pfronten GmbH, 87459 Pfronten (DE)
(72) Erfinder: KETTEMER, Rolf, 87616 Marktoberdorf (DE); HOLZNER, Alexander, 45481 Mühlheim an der Ruhr (DE); RAUSCH, Gerhard, 33378 Rheda-Wiedenbrück (DE)
(74) Vertreter: MERH-IP Matias Erny Reichl Hoffmann Patentanwälte PartG mbB
(86) Internationale Anmeldenummer: PCT/EP2018/053687
(87) Internationale Veröffentlichungsnummer: WO 2018/149879

(56) Entgegenhaltungen:
- DE-A1-102008 061 721
- US-A1- 2009 043 415
- US-A1- 2016 179 085

## Beschreibung

Die vorliegende Erfindung betrifft eine Datenschnittstellenvorrichtung zur Datenübertragung zwischen einer numerisch gesteuerten Werkzeugmaschine und einer externen Datenverarbeitungsvorrichtung, insbesondere zur Übertragung von Werkzeugmaschinendaten zwischen einer oder mehrerer numerisch gesteuerter Werkzeugmaschinen und einer oder mehreren externen Datenverarbeitungsvorrichtungen (z.B. einem Computer, Server oder Computer- bzw. Servernetzwerk).

### Hintergrund

Im Stand der Technik, wie z.B. in dem Dokument US 2016/179085 A1, sind numerisch gesteuerte Werkzeugmaschinen bekannt, die jeweils eine Steuereinrichtung zum Steuern einer Mehrzahl von Aktoren der Werkzeugmaschine und eine Mehrzahl von Sensoren zur Ausgabe von einen Maschinenzustand der Werkzeugmaschine betreffenden Sensorsignalen an die Steuereinrichtung umfassen.

Zur Auswertung bzw. Anzeige oder Überwachung eines Maschinenzustands der Werkzeugmaschine während des Betriebs bzw. während der Bearbeitung von Werkstücken an der Werkzeugmaschine ist es bekannt, in der Steuereinrichtung der Werkzeugmaschine bzw. an die Steuereinrichtung der Werkzeugmaschine angebunden prozessorgesteuerte Speichereinheiten (sog. Datenlogger) vorzusehen, die alle verfügbaren Sensorsignale der Sensoren der Werkzeugmaschine in einzelnen Kanälen bei gleicher Sampling-Frequenz bzw. Auslesefrequenz in einem Speichermedium zu speichern, wobei die Sampling-Frequenz bzw. Auslesefrequenz jedoch abhängig ist von den typabhängigen Möglichkeiten der Steuereinrichtung (NC Steuerung und/oder PLC bzw. SPS) der Werkzeugmaschine.

Somit wird mit im Stand der Technik bekannten Datenloggern für verschiedene Werkzeugmaschinen eine ungefilterte und unangepasste Flut von puren Sensorwertdaten aller verfügbarer Sensoren gespeichert, die jeweils werkzeugmaschinenabhängig als auch steuerungsabhängig sind.

Dies führt einerseits zu großen und unübersichtlich gesammelten Datenmengen und erschwert andererseits insbesondere die Auswertung bzw. Anzeige der gesammelten Daten in werkzeugmaschinenunabhängiger und/oder steuerungsunabhängiger Art und Weise.

Zudem ist es bekannt, dass Steuerungen (NC/PLC) für Werkzeugmaschinen von verschiedenen Herstellern bereitgestellt werden, und jeweils unterschiedliche, teils proprietäre, Datenschnittstellen aufweisen. Hierfür wird von den Steuerungen der Werkzeugmaschine zum Auslesen von Daten aus der Steuerung bzw. zum Empfangen von Daten von der Steuerung an externen Datenverarbeitungsvorrichtungen zumeist ein dafür vorgesehenes Kommunikationsprotokoll bereitgestellt. Derartige von den Maschinensteuerungen unterstützte Kommunikationsprotokolle sind teils sehr unterschiedlich und im Allgemeinen nicht kombinierbar bzw. integrierbar. Bekannte Steuerungen greifen auf bekannte System zurück, z.B. UDI-, RFC- oder auch OPC-basierte Systeme, jedoch verwenden Steuerungen mancher Steuerungshersteller individuelle proprietäre Kommunikationsprotokolle.

Dies erschwert es, eine einheitliche Datenübertragung von mehreren Werkzeugmaschinen, mit Steuerungen von verschiedenen Herstellern, an externe Datenverarbeitungsvorrichtungen in einheitlicher Art bereitzustellen, um z.B. in möglichst einheitlicher und einfacher Weise Maschinenzustandsdaten mehrerer Werkzeugmaschinen unterschiedlicher Hersteller bzw. mit Steuerungen unterschiedlicher Steuerungshersteller auszulesen und zu verarbeiten bzw. die Maschinenzustände der Werkzeugmaschinen zu überwachen.

Es ist in diesem Zusammenhang weiterhin bekannt, universelle Kommunikationsprotokolle (sog. Maschine-to-Machine-Kommunikationsprotokolle bzw. M2M-Kommunikationsprotokolle vorzusehen), mit der zugrunde liegenden Idee, Steuerungen von Werkzeugmaschinen mit einer einzigen externen Datenübertragungsschnittstelle vorzusehen, die in der Datenübertragung auf ein universelles M2M-Kommunikationsprotokoll zurückgreift.

Jedoch sind im Stand der Technik verschiedene derartige M2M-Kommunikationsprotokolle bekannt, und es ist nicht abzusehen, dass sich in Zukunft eines dieser bekannten M2M-Kommunikationsprotokolle als verwendetes Standardprotokoll durchsetzen könnte. Bekannte M2M-Kommunikationsprotokolle sind z.B. die Protokolle OPC UA, MTConnect, AMPQ oder auch MQTT.

Selbst wenn neuere Versionen von Steuerungen von Werkzeugmaschinen ein oder mehrere M2M-Kommunikationsprotokolle unterstützen sollten, oder neuere Versionen der M2M-Kommunikationsprotokolle zwischen einander eine Kompatibilität ermöglichen sollten, müssten dennoch ältere bestehende Versionen von Steuerungen an bereits im Einsatz befindlichen Werkzeugmaschinen nachgerüstet bzw. ausgetauscht werden.

Im Hinblick auf die vorstehend genannten Probleme ist es eine Aufgabe der vorliegenden Erfindung, eine Datenspeichervorrichtung zum Einsatz an einer numerisch gesteuerten Werkzeugmaschine bereitzustellen, die die vorstehend genannten Probleme zu vermeiden vermag.

Im Hinblick auf die vorstehend genannten Probleme ist es insbesondere eine Aufgabe der vorliegenden Erfindung, eine Datenübertragungslösung zwischen Werkzeugmaschinen und externen Datenverarbeitungsvorrichtungen (z.B. Servern oder Servernetzwerken) bereitzustellen, auf einfache, effiziente und zuverlässige Weise den Datenaustausch und die einheitliche Maschinenzustandsüberwachung ermöglicht, insbesondere in einem System mit einer Vielzahl von unterschiedlichen Werkzeugmaschinen - teils unterschiedlicher Baureihen und mit unterschiedlichem Baujahr sowie mit teils sehr unterschiedlichen Steuerungen unterschiedlicher Hersteller und unterschiedlichen Steuerungsversionen - und mit externen Datenverarbeitungsvorrichtungen zur Zustandsüberwachung der Werkzeugmaschinen.

Insbesondere ist es eine Aufgabe der vorliegenden Erfindung, eine vereinheitlichte, einfachere, übersichtlichere Datenübertragungs- bzw. Datenschnittstellenlösung zur Überwachung von Maschinenzuständen unterschiedlicher Werkzeugmaschinen mit unterschiedlichen Steuerungen bereitzustellen, die zudem bevorzugt unabhängig von Werkzeugmaschinentyp und/oder Steuerungstyp universell einsetzbar ist.

### Zusammenfassung

Zur Lösung der vorstehend genannten Aufgaben wird erfindungsgemäß eine Datenschnittstellenvorrichtung zum Einsatz an einer numerisch gesteuerten Werkzeugmaschine gemäß dem unabhängigen Anspruch 1 vorgeschlagen. Abhängige Ansprüche, Systemansprüche bzw. nebengeordnete Ansprüche betreffen bevorzugte Ausführungsbeispiele der vorliegenden Erfindung.

Die Steuerungsschnittstelleneinheit kann als Softwarekomponente einer oder mehrerer Computereinrichtungen und als Hardwarekomponente einer oder mehrerer Computereinrichtungen sowie als Kombination vorgesehen sein. Die Steuerungsschnittstelleneinheit kann direkt oder indirekt, z.B. über ein lokales oder globales Netzwerk, mit einer oder mehreren Steuereinrichtungen (NC- und/oder PLC Steuereinrichtungen) jeweiliger Werkzeugmaschinen verbunden sein oder auch in bzw. an die Steuereinrichtung eingebunden integriert sein.

Gemäß der Erfindung umfasst die Datenschnittstellenvorrichtung eine Datenverarbeitungseinrichtung zur Datenverarbeitung von Daten, insbesondere von Werkzeugmaschinendaten bzw. Signalwertdaten (z.B. von Sensor- und oder Steuersignalen der Werkzeugmaschine), insbesondere von zumindest über die Steuerungsschnittstelleneinheit empfangenen Daten.

Gemäß der Erfindung umfasst die Datenschnittstellenvorrichtung vorzugsweise eine erste Datenspeichereinrichtung mit einem ersten Speichermedium (z.B. bevorzugt ein nichtflüchtiges Speichermedium, z.B. in Form von einer oder mehrerer Festplatten und/oder einem oder mehreren SSD-Speichermedien) zum Speichern von über die Steuerungsschnittstelleneinheit empfangenen Daten und/oder von der Datenverarbeitung verarbeiteten Daten und einem zweiten Speichermedium (z.B. bevorzugt ein nichtflüchtiges Speichermedium, z.B. in Form von einer oder mehrerer Festplatten und/oder einem oder mehreren SSD-Speichermedien, oder ggf. nichtflüchtigen RAMs bzw. NVRAMs) zum Speichern von Konfigurationsdaten.

Gemäß einem Aspekt der Erfindung umfasst die Datenschnittstellenvorrichtung eine Kommunikationseinheit zur Datenübertragung mit der einen oder mehreren externen Datenverarbeitungsvorrichtungen. Eine derartige Kommunikationseinheit kann als Softwarekomponente einer oder mehrerer Computereinrichtungen und als Hardwarekomponente einer oder mehrerer Computereinrichtungen sowie als Kombination vorgesehen sein. Die Kommunikationseinheit kann direkt oder indirekt, z.B. über ein lokales oder globales Netzwerk, mit einer oder mehreren externen Datenverarbeitungsvorrichtungen (z.B. Computer, Werkzeugmaschinen-Front-End-Steuergeräten, Datenservern, Webservern, Datenbanksystemen, und Cloudsystemen) verbunden sein.

Gemäß der Erfindung geben die Konfigurationsdaten für eine oder mehrere Steuereinrichtungen von jeweiligen Werkzeugmaschinen, jeweils ein von der jeweiligen Steuereinrichtung der jeweiligen Werkzeugmaschine verwendetes bzw. unterstütztes Kommunikationsprotokoll aus einer ersten Gruppe von Kommunikationsprotokollen an.

Hierbei sind in der ersten Gruppe von Kommunikationsprotokollen insbesondere bevorzugt mehrere von Werkzeugmaschinensteuerungen verschiedener Hersteller oder Steuerungsversionen unterstützte Kommunikationsprotokolle umfasst, wie z.B. auf OPC basierende Kommunikationsprotokolle, auf UDI basierende Kommunikationsprotokolle, und/oder auch proprietäre Kommunikationsprotokolle, die z.B. jeweils von unterschiedlichen Werkzeugmaschinensteuerungen unterschiedener Hersteller unterstützt werden, ggf. von NC/PLC-Steuerungssystemen von Siemens, Heidenhain, Fanuc, Mitsubishi etc.

Gemäß der Erfindung geben die Konfigurationsdaten für eine oder mehrere externe Datenverarbeitungsvorrichtungen ein von der jeweiligen externen Datenverarbeitungsvorrichtung verwendetes bzw. unterstütztes Kommunikationsprotokoll aus einer zweiten Gruppe von Kommunikationsprotokollen an.

Hierbei sind in der zweiten Gruppe von Kommunikationsprotokollen insbesondere bevorzugt mehrere M2M-Kommunikationsprotokolle ("M2M" für Machine-to-Machine bzw. Maschine-zu-Maschine), ggf. einschließlich sog. universeller M2M-Kommunikations-protokolle umfasst, wie z.B. auf OPC UA basierende Kommunikationsprotokolle, auf MQTT basierende Kommunikationsprotokolle, auf MTConnect basierende Kommunikationsprotokolle, und/oder auf AMPQ basierende Kommunikationsprotokolle umfasst.

Es sei darauf hingewiesen, dass die erste und zweite Gruppe von Kommunikationsprotokollen nur jeweils unterschiedliche Kommunikationsprotokolle umfassen können, jedoch auch überlappen können in dem Sinne, dass ein oder mehrere Kommunikationsprotokolle der einen Gruppe auch in der anderen Gruppe umfasst sind.

Gemäß der Erfindung ist die Steuerungsschnittstelleneinheit dazu eingerichtet, zur Datenübertragung (insbesondere mit Werkzeugmaschinensteuerungen bzw. Steuereinrichtungen von Werkzeugmaschinen) jedes der Kommunikationsprotokolle aus der ersten Gruppe von Kommunikationsprotokollen zu verwenden bzw. zu unterstützen.

Dies bedeutet insbesondere bevorzugt, dass die Steuerungsschnittstelleneinheit vorzugsweise dazu eingerichtet ist, Datenpakete der verschiedenen Kommunikationsprotokolle aus der ersten Gruppe zu empfangen und zu decodieren (insbesondere gemäß den jeweiligen Kommunikationsprotokollen etwaige Header-Daten zu decodieren). Bevorzugt bedeutet dies zudem, dass die Steuerungsschnittstelleneinheit vorzugsweise dazu eingerichtet ist, Datenpakete der verschiedenen Kommunikationsprotokolle aus der ersten Gruppe zu senden und zu codieren (insbesondere gemäß den jeweiligen Kommunikationsprotokollen etwaige Header-Daten zu codieren bzw. zu generieren). Weiterhin bedeutet dies insbesondere bevorzugt, dass die Steuerungsschnittstelleneinheit mit Einrichtungen, die zur Kommunikation bzw. zur Datenübertragung ein Kommunikationsprotokoll der ersten Gruppe unterstützen bzw. verwenden, Kommunikationsverbindungen aufbauen kann und/oder Datenübertragungen (bevorzugt bidirektional) durchführen kann.

Gemäß der Erfindung ist die Steuerungsschnittstelleneinheit dazu eingerichtet, für die Datenübertragung mit der/den Steuereinrichtung(en) der Werkzeugmaschine(n) auf Grundlage der Konfigurationsdaten das von der jeweiligen Steuereinrichtung der jeweiligen Werkzeugmaschine verwendete Kommunikationsprotokoll auszuwählen, insbesondere um mit der entsprechenden Steuereinrichtung mit dem von dieser verwendeten bzw. unterstützten Kommunikationsprotokolls zu kommunizieren, die Kommunikationsverbindung aufzubauen und/oder die Datenübertragung durchzuführen.

Gemäß der Erfindung ist die Kommunikationseinheit dazu eingerichtet, zur Datenübertragung jedes der Kommunikationsprotokolle aus der zweiten Gruppe von Kommunikationsprotokollen zu verwenden bzw. zu unterstützen, insbesondere zur Datenübertragung mit einer oder mehreren externen Datenverarbeitungsvorrichtungen.

Dies bedeutet insbesondere bevorzugt, dass die Kommunikationseinheit vorzugsweise dazu eingerichtet ist, Datenpakete der verschiedenen Kommunikationsprotokolle aus der zweiten Gruppe zu senden und zu codieren (insbesondere gemäß den jeweiligen Kommunikationsprotokollen etwaige Header-Daten zu codieren bzw. zu generieren). Bevorzugt bedeutet dies zudem, dass die Kommunikationseinheit vorzugsweise dazu eingerichtet ist, Datenpakete der verschiedenen Kommunikationsprotokolle aus der zweiten Gruppe zu empfangen und zu decodieren (insbesondere gemäß den jeweiligen Kommunikationsprotokollen etwaige Header-Daten zu decodieren). Weiterhin bedeutet dies insbesondere bevorzugt, dass die Kommunikationseinheit mit Einrichtungen, die zur Kommunikation bzw. zur Datenübertragung ein Kommunikationsprotokoll der zweiten Gruppe unterstützen bzw. verwenden, Kommunikationsverbindungen aufbauen kann und/oder Datenübertragungen (bevorzugt bidirektional) durchführen kann.

Gemäß einer zweckmäßigen Ausführung ist die Kommunikationseinheit vorzugsweise dazu eingerichtet, für die Datenübertragung mit der einen oder mehreren externen Datenverarbeitungsvorrichtungen auf Grundlage der Konfigurationsdaten das von der/den jeweiligen externen Datenverarbeitungsvorrichtung(en) verwendete Kommunikationsprotokoll auszuwählen, insbesondere um mit der entsprechenden externen Datenverarbeitungsvorrichtung mit dem von dieser verwendeten bzw. unterstützten Kommunikationsprotokolls zu kommunizieren, die Kommunikationsverbindung aufzubauen und/oder die Datenübertragung durchzuführen.

Gemäß einer bevorzugten, zweckmäßigen Ausführung ist die Steuerungsschnittstelleneinheit dazu eingerichtet, (bevorzugt parallel) mit mehreren gleichzeitig verbundenen Steuereinrichtungen jeweiliger Werkzeugmaschinen Daten zu übertragen.

Bevorzugt geben die Konfigurationsdaten für jede der verbundenen Steuereinrichtungen das von der jeweiligen Steuereinrichtung verwendete Kommunikationsprotokoll aus der ersten Gruppe von Kommunikationsprotokollen an. Dies hat den Vorteil, dass die Steuerungsschnittstelleneinheit, die mehrere Kommunikationsprotokolle der ersten Gruppe unterstützt, auf flexible, einfache und zuverlässige Weise mit der jeweiligen Steuereinrichtung jeweils das von dieser verwendete Kommunikationsprotokoll auswählen zu können und zu verwenden (insbesondere z.B. wenn Datenpakete übermittelt werden sollen, um die Steuereinrichtung anzufragen, Daten zu übertragen, oder aktiv an der Steuerung Daten auszulesen).

Bevorzugt ist die Steuerungsschnittstelleneinheit dazu eingerichtet, für die Datenübertragung mit einer der verbundenen Steuereinrichtungen auf Grundlage der Konfigurationsdaten das von der einen Steuereinrichtung verwendete Kommunikationsprotokoll auszuwählen und für die Datenübertragung mit einer anderen der verbundenen Steuereinrichtungen auf Grundlage der Konfigurationsdaten das von der anderen Steuereinrichtung verwendete Kommunikationsprotokoll auszuwählen.

Wenn einer oder mehrere Steuereinrichtungen verbunden werden oder von der Verbindung getrennt werden, kann dies auf einfache Weise in den Konfigurationsdaten angegeben werden bzw. hinterlegt werden, so dass die Steuerungsschnittstelleneinheit das entsprechende Kommunikationsprotokoll passend auswählen und verwenden kann.

Gemäß einer bevorzugten, zweckmäßigen Ausführung ist die Kommunikationseinheit dazu eingerichtet, (bevorzugt parallel) mit mehreren verbundenen externen Datenverarbeitungsvorrichtungen Daten zu übertragen.

Bevorzugt geben die Konfigurationsdaten für jede der verbundenen externen Datenverarbeitungsvorrichtungen das von der externen Datenverarbeitungsvorrichtung verwendete Kommunikationsprotokoll aus der zweiten Gruppe von Kommunikationsprotokollen an. Dies hat den Vorteil, dass die Kommunikationseinheit, die mehrere Kommunikationsprotokolle der zweiten Gruppe unterstützt, auf flexible, einfache und zuverlässige Weise mit der jeweiligen externen Datenverarbeitungsvorrichtung jeweils das von dieser verwendete Kommunikationsprotokoll auswählen zu können und zu verwenden (insbesondere z.B. wenn Datenpakete übermittelt werden sollen, um Datenpakete zu übertragen oder zu empfangen).

Bevorzugt ist die Kommunikationseinheit dazu eingerichtet, für die Datenübertragung mit einer (oder mehreren) der verbundenen externen Datenverarbeitungsvorrichtungen auf Grundlage der Konfigurationsdaten das von der einen (oder den mehreren) verbundenen externen Datenverarbeitungsvorrichtung(en) (jeweils) verwendete Kommunikationsprotokoll auszuwählen, und insbesondere für die Datenübertragung mit einer anderen der verbundenen externen Datenverarbeitungsvorrichtungen auf Grundlage der Konfigurationsdaten das von der anderen verbundenen externen Datenverarbeitungsvorrichtung verwendete Kommunikationsprotokoll auszuwählen.

Wenn einer oder mehrere externe Datenverarbeitungsvorrichtungen verbunden werden oder von der Verbindung getrennt werden, kann dies auf einfache Weise in den Konfigurationsdaten angegeben werden bzw. hinterlegt werden, so dass die Kommunikationseinheit das entsprechende Kommunikationsprotokoll passend auswählen und verwenden kann.

Gemäß einer bevorzugten, zweckmäßigen Ausführung geben die Konfigurationsdaten für eine oder mehrere Werkzeugmaschinen, die bevorzugt jeweils eine Mehrzahl von Sensoren zur Ausgabe von einen Maschinenzustand der jeweiligen Werkzeugmaschine betreffenden Sensorsignalen an die Steuereinrichtung der jeweiligen Werkzeugmaschine umfassen, bevorzugt eine jeweilige Gruppe von Sensoren der jeweiligen Werkzeugmaschine und/oder Auslese- und/oder Verarbeitungsregeln für Sensorsignale der Gruppe von Sensoren der jeweiligen Werkzeugmaschine an.

Dies hat den Vorteil, dass je nach Werkzeugmaschinentyp, Werkzeugmaschinenausführung, Sensorausstattung der Werkzeugmaschine oder ggf. auch Werkzeugmaschinenhersteller für die entsprechende jeweilige Werkzeugmaschine jeweils die vorhandenen Sensoren bzw. die vorhandene Sensorausstattung der Werkzeugmaschine in den Konfigurationsdaten definierbar bzw. auch bei Erweiterung oder Nachrüstung der Werkzeugmaschine mit neueren, anderen oder zusätzlichen Sensoren anpassbar ist.

Bevorzugt umfasst die Datenschnittstellenvorrichtung eine Ausleseeinheit zum Auslesen von Sensorsignalwerten der Sensorsignale der in den Konfigurationsdaten angegebenen Gruppe von Sensoren der Werkzeugmaschine über die Steuerungsschnittstelleneinheit auf Grundlage der der in den Konfigurationsdaten angegebenen Ausleseregeln.

Bevorzugt ist die Datenverarbeitungseinrichtung dazu eingerichtet, die mittels der Ausleseeinheit ausgelesenen Sensorsignalwerte auf Grundlage der in den Konfigurationsdaten angegebenen Verarbeitungsregeln zu aggregierten Sensorikdaten zu verarbeiten.

Somit können die jeweils verfügbaren bzw. auslesbaren Maschinendaten bzw. Sensorikdaten auf einfache und zuverlässige Weise maschinenindividuell ausgelesen bzw. empfangen werden, wobei vorteilhaft zudem durch potentiell individuelle Auslese- und/oder Verarbeitungsregeln maschinenindividuell definierbar ist, wie die Daten vorliegen und/oder auszulesen sind bzw. wie diese ggf. weiterverarbeitet oder aggregiert werden sollen bzw. können. Dies kann z.B. auch steuerungsindividuell und/oder sensorindividuell eingestellt bzw. definiert werden (insbesondere z.B. durch definierte Ausleseintervalle für verschiedene Maschinen bzw. verschiedene Sensoren einer Maschine).

Gemäß einer bevorzugten, zweckmäßigen Ausführung ist die Datenverarbeitungseinrichtung dazu eingerichtet, Datensätze eines vorbestimmten, bevorzugt von den Kommunikationsprotokollen der ersten und/oder zweiten Gruppen unabhängigen Datenformats zu erzeugen, insbesondere bevorzugt auf Grundlage der von über die Steuerungsschnittstelleneinheit empfangenen Daten, insbesondere bevorzugt auf Grundlage der von der Datenverarbeitungseinrichtung verarbeiteten Daten und/oder insbesondere bevorzugt auf Grundlage der von der Datenspeichereinrichtung gespeicherten Daten.

Dies hat den Vorteil, dass unabhängig von den verwendeten Kommunikationsprotokollen der Steuereinrichtung(en) bzw. den verwendeten Kommunikationsprotokollen der externen Datenverarbeitungsvorrichtung(en) ein einheitliches Datenformat, insbesondere für Nutzdaten (Payload-Daten) von zu erzeugenden Datenpaketen, bereitgestellt werden kann, so dass selbst in höchst inhomogenen Systemen, die viele Werkzeugmaschinen unterschiedlichster Hersteller und mit unterschiedlichsten Steuerungen Daten in einheitlichem Datenformat austauschbar sind, und auch in diesem einheitlichem Datenformat an eine Vielzahl von externen Einrichtungen und Systemen mit unterschiedlichsten Kommunikationsprotokollen übertragbar sind, und in derartigen inhomogenen Systemen einheitlich auswertbar und vergleichbar sind.

Dies ermöglicht eine höchst einheitliche Datenübertragungs- und Datenauswertungslösung in derartigen inhomogenen Systemen die viele Werkzeugmaschinen unterschiedlichster Hersteller und mit unterschiedlichsten Steuerungen und/oder eine Vielzahl unterschiedlicher Datensammel- bzw. Datenauswerte umfassen, so dass auf einfache, einheitliche, zuverlässige und vergleichbare Weise Maschinenzustände in großen Werkshallen und auch über die Grenzen von Werkshallen ermittelt, beobachtet, ausgewertet und analysiert werden können.

Gemäß einer bevorzugten, zweckmäßigen Ausführung umfasst bevorzugt jeder erzeugte Datensatz Identifikationsdaten, die betreffend den erzeugten Datensatz zugrundeliegenden Daten eine Identität einer oder mehrerer Werkzeugmaschinen, eine Identität einer oder mehrerer Werkzeugmaschinenbauteile und/oder eine Identität eines oder mehrerer Sensoren angeben. Dies ermöglicht es auf einfache Weise, Maschinenzustände verschiedener Werkzeugmaschinen, Werkzeugmaschinen-komponenten oder Sensorsysteme durchzuführen und nachvollziehbar und auswertbar in Datenbanken zu hinterlegen, da stets für jeden Datensatz bekannt ist, welcher Maschine, Maschinenkomponente bzw. welchem Sensorsystem der entsprechende Datensatz zuordenbar ist.

Gemäß einer bevorzugten, zweckmäßigen Ausführung gibt jeder erzeugte Datensatz Wertdaten und einen oder mehrere mit den Wertdaten assoziierte Zeitstempel angeben (so dass vorteilhaft die Zeit der Datenerfassung, -ausgabe und/oder -auswertung der jeweiligen Wertdaten hinterlegbar ist).

Vorzugsweise geben die Wertdaten jeweils einen oder mehrere Datenwerte an, wie z.B. einen oder mehrere Sensorsignal- und/oder Steuersignalwerte, einen oder mehrere aus mehreren Signalwerten berechnete Datenwerte (wie z.B. Mittelwerte über bestimmte Zeitintervalle, verdichtete Signalwerte, Werte, die auf Basis von mehreren Signalen berechnet werden, umgerechnete Werte, z.B. durch Umrechnung in einheitliche Einheitensystem) und/oder einen oder mehrere einen Maschinenzustand einer oder mehrerer Werkzeugmaschinen angebende Zustandswerte.

Einen Maschinenzustand einer oder mehrerer Werkzeugmaschinen angebende Zustandswerte können z.B. bevorzugt auf Basis von einem oder mehreren ausgelesenen Signalwerten (und/oder Steuersignalwerten) berechnet werden und/oder können auch direkt aus der Steuerung ausgelesen sein. Derartige Zustandswerte können bevorzugt einen Zustand (z.B. aus einer Gruppe von vorgegebenen möglichen Zuständen) einer Werkzeugmaschine, einer Werkzeugmaschinenkomponente und/oder einer Sensorik bzw. von Bauteilen oder Baugruppen der Werkzeugmaschine angeben.

Vorzugsweise ist für jeden Datensatz und/oder für jeden Wert der Wertdaten ein Datentyp angegeben, wobei der Datentyp vorzugsweise angibt, ob der entsprechende Wert (der Wertdaten) einen Maschinenstatus, einen Signalwert (oder einen mehrere Signalwerte angebenden Wert) oder ein Betriebsereignis bei dem Betrieb einer entsprechenden Werkzeugmaschine beschreibt.

Dies kann z.B. durch die Typen "STATUS" (wenn z.B. ein Zustand einer Werkzeugmaschine, einer Werkzeugmaschinenkomponente und/oder einer Sensorik bzw. von Bauteilen oder Baugruppen der Werkzeugmaschine angegeben wird), "EVENT" (wenn z.B. ein Ereignis an einer Werkzeugmaschine, einer Werkzeugmaschinenkomponente oder ähnlichem angegeben wird (z.B. ein Maschinenstop, ein Notausstop, eine Kollision bei einer Bearbeitung an der Werkzeugmaschine, ein Wartungs- bzw. Reparaturereignis, wenn eine Warnung ausgegeben wird, oder ähnlichem), und "VALUE", wenn z.B. einfach nur momentane, aggregierte oder gemittelte Sensorsignalwerte bzw. Steuersignalwerte angegeben werden.

Gemäß einer bevorzugten, zweckmäßigen Ausführung ist die Datenverarbeitungseinrichtung bevorzugt auf Basis von in dem zweiten Speichermedium gespeicherten Signaturdaten dazu eingerichtet, einem erzeugten Datensatz eine elektronische Signatur anzufügen und/oder an Datensätzen angefügte Signaturen zu überprüfen. Dies ermöglicht es, Datensätze für spätere etwaige Datenprüfungen mit Signaturen zu versehen oder angefügte Signaturen zu überprüfen, z.B. auf Basis von in den Konfigurationsdaten hinterlegten Signaturdaten (oder auf Basis von aus der Steuerungseinrichtung ausgelesenen Signaturdaten, wenn z.B. ein momentan an der Werkzeugmaschine eingeloggter bzw. authentifizierter Bediener eine persönliche (elektronische) Signatur an der Steuerungseinrichtung hinterlegt hat oder mit dieser eingeloggt ist.

Gemäß einer bevorzugten, zweckmäßigen Ausführung ist die Datenverarbeitungseinrichtung bevorzugt auf Basis von in dem zweiten Speichermedium gespeicherten Verschlüsselungsdaten dazu eingerichtet, einen erzeugten Datensatz zu verschlüsseln und/oder verschlüsselte Datensätze auf Basis von in dem zweiten Speichermedium gespeicherten Verschlüsselungsdaten zu entschlüsseln. Dies hat den Vorteil, dass die Daten, die über lokale bzw. gar globale Netzwerke übertragen werden, ggf. mit sensiblen Daten (z.B. wenn diese von Werkzeugmaschinen unterschiedlicher Anwender gesammelt werden, z.B. durch den Werkzeugmaschinen- oder Steuerungshersteller, um ggf. ein automatisches Wartungsmonitoring mit Ferndiagnosen für verschiedene Anwender anzubieten, oder zum Auswerten der langzeitlichen Betriebszustandsentwicklungen für die Verbesserung und Entwicklung von neuen Werkzeugmaschinentypen), auf einfache, zuverlässige und sichere Weise für die Übertragung (z.B. über das Internet oder in die Cloud) verschlüsselt werden können.

Gemäß einer bevorzugten, zweckmäßigen Ausführung ist die Datenverarbeitungseinrichtung weiterhin dazu eingerichtet, einem erzeugten Datensatz eine Identifikationssignatur bzw. eine Identifikationsnummer anzufügen. Dies ermöglicht es auf einfache Weise, die Identität der Datenschnittstellenvorrichtung im Datensatz zu hinterlegen (insbesondere als eindeutige Identifikation der Datenquelle), z.B. für Systeme in denen mehrere erfindungsgemäße Datenschnittstellenvorrichtungen parallel und/oder hintereinandergeschaltet verwendet werden.

Gemäß einer bevorzugten, zweckmäßigen Ausführung ist die Kommunikationseinheit dazu eingerichtet, für die Datenübertragung mit der externen Datenverarbeitungsvorrichtung ein Datenpaket mit Header-Daten und Nutzdaten zu erzeugen, wobei die Header-Daten bevorzugt auf Grundlage des von der externen Datenverarbeitungsvorrichtung verwendeten Kommunikationsprotokolls erzeugt werden und/oder die Nutzdaten einen oder mehrere von der Datenverarbeitungseinrichtung erzeugte Datensätze des von den Kommunikationsprotokollen der ersten und zweiten Gruppen unabhängigen Datenformats umfassen.

Dies ermöglicht es auf einfache Weise, die Strukturen der uneinheitlichen Kommunikationsmethoden (Kommunikations-protokolle) von den übertragenen Inhalten zu trennen und diese Inhalte trotzdem vorteilhaft in vereinheitlichter Form bereitzustellen, da die Header-Informationen zwar stets protokollabhängig sind, die übertragenen Inhalte (Datensätze) der einfach extrahierbaren Nutzdaten (Payload-Daten) jedoch maschinenunabhängig, steuerungsunabhängig und protokollunabhängig stets das einfache und zuverlässige einheitliche Datenformat aufweisen.

Gemäß einer bevorzugten, zweckmäßigen Ausführung ist die Steuerungsschnittstelleneinheit dazu eingerichtet, für die Datenübertragung mit der Steuereinrichtung ein Datenpaket mit Header-Daten zu erzeugen, wobei die Header-Daten auf Grundlage des von der Steuereinrichtung verwendeten Kommunikationsprotokolls erzeugt werden.

Gemäß einer bevorzugten, zweckmäßigen Ausführung ist die Datenverarbeitungseinrichtung dazu eingerichtet, einen oder mehrere Datensätze in regelmäßigen Zeitintervallen, die insbesondere bevorzugt in den Konfigurationsdaten angegeben sind, auf Basis von in den Konfigurationsdaten angegebenen Verarbeitungsregeln zu erzeugen und/oder an die Kommunikationseinheit zu senden, insbesondere bevorzugt mit einer Instruktion, die den einen oder die mehreren Datensätze in einem oder mehreren Datenpaketen gemäß einem oder mehreren Kommunikationsprotokollen der zweiten Gruppe zu übertragen. Somit können die Übertragungsintervalle bei regelmäßigen Datenübertragungen (z.B. zur laufenden Zustandskontrollen und/oder Maschinenüberwachung) vorteilhaft einfach in den Konfigurationsdaten eingestellt werden.

Gemäß einer bevorzugten, zweckmäßigen Ausführung ist die Kommunikationseinheit dazu eingerichtet, die einen oder die mehreren Datensätze in einem oder mehreren Datenpaketen gemäß einem oder mehreren Kommunikationsprotokollen der zweiten Gruppe an mehrere verbundene externe Datenverarbeitungsvorrichtungen gemäß eines Publish-Subscriber-Modells zu übertragen, wobei die Konfigurationsdaten bevorzugt insbesondere Subscriberidentifikationsdaten umfassen, die vorzugsweise einen oder mehrere der verbundenen externe Datenverarbeitungsvorrichtungen als eingeschriebene Subscriber angeben.

Dies hat den Vorteil, dass die Datenschnittstellenvorrichtung auf einfache Weise die entsprechenden Datensätze an alle externen Datenverarbeitungsvorrichtungen aus einer oder mehreren Subscribergruppen (die ggf. unterschiedliche Datensätze erhalten können) übertragen kann, wobei sich externe Datenverarbeitungsvorrichtungen auf einfache Weise als Subscriber anmelden können, um die entsprechenden mit der jeweiligen Subscribergruppe assoziierten Datensätze (z.B. auf Basis einer Zuordnung von Inhalten und/oder Datasatztypen zu der entsprechenden Subscribergruppe) zu empfangen, oder durch Abmelden aus der jeweiligen Subscribergruppe das Empfangen beenden können.

Gemäß einer bevorzugten, zweckmäßigen Ausführung weist die Kommunikationseinheit eine Datensatz-Ausgabeeinheit auf, die direkt oder über ein Datennetzwerk mit einer Steuerungsschnittstelleneinheit einer anderen Datenschnittstellenvorrichtung gemäß einem der vorstehenden (und später beschriebenen) Aspekte verbindbar ist, bevorzugt um von der Datenverarbeitungseinrichtung erzeugte Datensätze an die andere Datenschnittstellenvorrichtung zu übertragen.

Dies hat den Vorteil, dass die erfindungsgemäße Datenschnittstellenvorrichtung (z.B. gemäß einem der hier beschriebenen Aspekte und Beispiele) zudem Datensätze mittels der Kommunikationseinheit an eine verbundene andere erfindungsgemäße Datenschnittstellenvorrichtung (z.B. gemäß einem der hier beschriebenen Aspekte und Beispiele) übertragen zu können, z.B. um die Datensätze verschiedener parallel verbundener Datenschnittstellenvorrichtungen an der "übergeordneten" Datenschnittstellenvorrichtungen zu sammeln.

Gemäß einer bevorzugten, zweckmäßigen Ausführung weist die Steuerungsschnittstelleneinheit eine Datensatz-Empfangseinheit auf, die direkt oder über ein Datennetzwerk mit einer Kommunikationseinheit einer anderen Datenschnittstellenvorrichtung gemäß einem der vorstehenden (und später beschriebenen) Aspekte verbindbar ist, bevorzugt um von einer Datenverarbeitungseinrichtung der anderen Datenschnittstellenvorrichtung zu empfangen.

Dies hat den Vorteil, dass die erfindungsgemäße Datenschnittstellenvorrichtung (z.B. gemäß einem der hier beschriebenen Aspekte und Beispiele) zudem Datensätze mittels der Steuerungsschnittstelleneinheit von einer oder bevorzugt mehrerer verbundener anderer erfindungsgemäßer Datenschnittstellenvorrichtung (z.B. gemäß einem der hier beschriebenen Aspekte und Beispiele) empfangen zu können, z.B. um die Datensätze verschiedener parallel verbundener "untergeordneter" Datenschnittstellenvorrichtungen an der "übergeordneten" Datenschnittstellen-vorrichtungen zu sammeln (z.B. zur Auswertung, Langzeitspeicherung, Überprüfung, Aggregation, etc.).

Hierbei können zudem die Übertragungsgeschwindigkeiten erhöht werden und der gesamte Datenfluss optimiert werden, da zwischen den Datenschnittstellenvorrichtungen ein einheitliches Protokoll und gemeinsame bzw. abgestimmte Voreinstellungen in den jeweiligen Konfigurationsdaten verwendbar sind, wobei das gesamte System der miteinander verbundenen Datenschnittstellenvorrichtungen "nach außen" weiterhin die höchst vielseitige Anwendbarkeit mit vielen Steuerungen (d.h. unterschiedliche Steuerungsprotokolle werden weiterhin durch die Steuerschnittstelleneinheiten der "untergeordneten" Datenschnittstellenvorrichtungen unterstützt) und vielen externen Datenverarbeitungsvorrichtungen (d.h. unterschiedliche M2M-Protokolle werden weiterhin durch die Kommunikationseinheit der "übergeordneten" Datenschnittstellenvorrichtung unterstützt) gewährleisten kann. Hierbei sind bevorzugt eine Vielzahl von Verbindungen möglich (z.B. one-to-many, many-to-one, many-to-many, many-to-many-to-one, many-to-one-to-many, etc.).

Gemäß einer bevorzugten, zweckmäßigen Ausführung ist die Kommunikationseinheit dazu eingerichtet, von einer externen Datenverarbeitungsvorrichtung Konfigurationsinstruktionen zu empfangen, wobei die Datenverarbeitungseinrichtung vorzugsweise dazu eingerichtet ist, auf Grundlage der über die Kommunikationseinheit empfangenen Konfigurationsinstruktionen die in der Datenspeichereinrichtung gespeicherten Konfigurationsdaten zu modifizieren und/oder neue Konfigurationsdaten zu speichern. Somit können die zugrundeliegenden Konfigurationsdaten auf einfache Weise angepasst, eingestellt, verändert oder optimiert werden. Zudem ist es möglich, flexibel auf Systemänderungen einzugehen, z.B. wenn Werkzeugmaschinen, Werkzeugmaschinensteuerungen, Werkzeugmaschinensysteme erweitert, nachgerüstet, mit weiteren Funktionen und/oder Komponenten ausgestattet werden, oder ein Austausch von Komponenten, Maschinen oder ähnlichem erfolgt, oder auch wenn die zu erzeugenden Datensätze, die zu erzeugenden Wertdaten angepasst, optimiert, oder eingestellt werden sollen.

Gemäß einer bevorzugten, zweckmäßigen Ausführung weist die Datenspeichereinrichtung eine Datenschnittstelle auf, die bevorzugt dazu eingerichtet ist, die in dem ersten Datenspeichermedium gespeicherten Daten zur Datensicherung und/oder Langzeitspeicherung an eine extern verbundene Datenspeichervorrichtung zu übertragen, insbesondere bevorzugt gemäß einer synchronen, asynchronen, in regelmäßigen Abständen durchgeführten und/oder bei Überschreiten eines Grenzwerts der in dem ersten Datenspeichermedium gespeicherten Datenmenge durchgeführten. Datenübertragung bzw. Datenspiegelung. Dies hat den Vorteil, dass (z.B. über direkte oder zumindest lokale Verbindungen die Daten gespeichert, gesichert oder langzeitgespeichert zu werden. Es ist z.B. denkbar alle (oder ausgewählte) ausgelesenen Rohdaten und/oder berechnete Datensätze direkt in der verbundenen Datenspeichervorrichtung zu speichern, um trotz etwaigen Netzausfällen die Daten stets lokal sichern zu können, ohne an der Datenschnittstellenvorrichtung, die teilweise direkt an jeder Werkzeugmaschine oder Werkzeugmaschinengruppe bereitgestellt sein können, selbst zu große Datenspeichermedien vorsehen zu müssen.

Gemäß einer bevorzugten, zweckmäßigen Ausführung ist die externe Datenspeichervorrichtung über ein lokales oder globales Netzwerk verbunden, und umfasst bevorzugt einen externen Datenserver (zur Datenspeicherung, Auswertung, und/oder Weiterübertragung), einen Webserver (zur Auswertung bzw. bevorzugt, um einen Zugriff auf die Daten bzw. Datensätze bzw. Auswertedaten z.B. über Webapplikationen über lokale, globale Netzwerke oder gar das Internet zu ermöglichen), eine externen Message-Broker-Einheit (z.B. um die empfangenen Datensätze unter verschiedensten Einheiten und Systemen teilen zu können) und/oder eine andere Datenschnittstellenvorrichtung gemäß einem der vorstehenden Aspekte; bzw. bevorzugt ist die als ein externer Datenserver, ein Webserver, eine externe Message-Broker-Einheit und/oder eine andere Datenschnittstellenvorrichtung gemäß einem der vorstehenden Aspekte ausgebildet.

Gemäß einem weiteren Aspekt wird ein System mit einer oder mehreren Datenschnittstellenvorrichtungen gemäß einem der vorstehenden Aspekte und mit einer oder mehreren externer Datenverarbeitungseinrichtungen voreschlagen, die vorzugsweise über ein lokales oder globales Datennetzwerk mit einer Kommunikationseinheit zumindest einer der Datenschnittstellenvorrichtungen verbunden sind, wobei insbesondere bevorzugt eine Kommunikationseinheit zumindest einer der Datenschnittstellenvorrichtungen über ein lokales oder globales Datennetzwerk mit einer Steuerungsschnittstelleneinheit einer anderen Datenschnittstellenvorrichtung verbunden ist.

Zusammenfassend wird eine Datenübertragungslösung zwischen Werkzeugmaschinen und externen Datenverarbeitungsvorrichtungen (z.B. Servern oder Servernetzwerken) bereitgestellt, die auf einfache, effiziente und zuverlässige Weise den Datenaustausch und die einheitliche Maschinenzustandsüberwachung ermöglicht, insbesondere in einem System mit einer Vielzahl von unterschiedlichen Werkzeugmaschinen - teils unterschiedlicher Baureihen und mit unterschiedlichem Baujahr sowie mit teils sehr unterschiedlichen Steuerungen unterschiedlicher Hersteller und unterschiedlichen Steuerungsversionen - und mit externen Datenverarbeitungsvorrichtungen zur Zustandsüberwachung der Werkzeugmaschinen.

Insbesondere kann eine vereinheitlichte, einfachere, übersichtlichere Datenübertragungs- bzw. Datenschnittstellenlösung zur Überwachung von Maschinenzuständen unterschiedlicher Werkzeugmaschinen mit unterschiedlichen Steuerungen bereitgestellt werden, die zudem vorteilhaft unabhängig von Werkzeugmaschinentyp und/oder Steuerungstyp universell einsetzbar sein kann.

Zudem bietet die Erfindung den Vorteil, dass Sensorikdaten und Maschinenzustandsdaten bzw. die vorstehend genannten Datensätze über lokale oder globale Netzwerke von mehreren Werkzeugmaschinen auch von sehr unterschiedlichen Standorten auf einfache und universelle Weise übertragen werden können, so z.B. auch um vereinheitlichte Fernwartungsdiagnosen zu ermöglichen oder vorteilhaft Vergleichsanalysen der Sensorikdaten unterschiedlicher Werkzeugmaschinen oder auch gleicher, unter unterschiedlichen Bedingungen und an unterschiedlichen Standorten eingesetzten Werkzeugmaschinen zu ermöglichen.

Weitere Aspekte und deren Vorteile als auch Vorteile und speziellere Ausführungsmöglichkeiten der vorstehend beschriebenen Aspekte und Merkmale werden aus den folgenden aufzufassenden Beschreibungen und Erläuterungen zu den angehängten Figuren beschrieben.

### Kurzbeschreibung der Figuren

Fig. 1 zeigt eine beispielhafte schematische Darstellung eines Systems mit einer Datenspeichervorrichtung gemäß einem Ausführungsbeispiel der Erfindung.
Fig. 2 zeigt eine beispielhafte schematische Darstellung eines Systems gemäß einem weiteren Ausführungsbeispiel der Erfindung.

### Detaillierte Beschreibung der Figuren und bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Hierbei wird erfindungsgemäß in Ausführungsbeispielen eine Datenschnittstellenvorrichtung zum Einsatz an einer numerisch gesteuerten Werkzeugmaschine und in Verbindung zu externen Datenverarbeitungsvorrichtungen (z.B. Datenserver, Webserver, Computer, PC, Notebook, Tablet und/oder Smartphone) bzw. in Verbindung zu externen Datennetzwerken (LAN, WAN, Intranet, und/oder Internet) vorgeschlagen, wobei die Werkzeugmaschine eine Steuereinrichtung (z.B. NC und/oder PLC) zum Steuern einer Mehrzahl von Aktoren der Werkzeugmaschine und eine Mehrzahl von Sensoren zur Ausgabe von einen Maschinenzustand der Werkzeugmaschine betreffenden Sensorsignalen an die Steuereinrichtung umfasst.

Dies ermöglicht z.B. ein verbessertes "Condition Monitoring" (Zustandsüberwachung), d.h. z.B. eine permanente und/oder regelmäßige Erfassung von Maschinenprozessdaten (z.B. von Temperaturen, Belastungen, Schwingungen) von entsprechenden Sensoren der Werkzeugmaschine zur Ermittlung des Maschinenzustandes (z.B. des momentanen Maschinenzustandes, eines durchschnittlichen Maschinenzustandes, eines Maschinenzustandes zu einem vorherigen Zeitpunkts oder in einem vorherigen Zeitraum, oder auch ein Maschinenzustand zu Spitzenbearbeitungszeiten im Grenzbereich).

Durch nachgelagerte Berechnungen und Analysen dieser ermittelten Daten lassen sich vorteilhaft Veränderungen der Gesamtmaschine oder einzelner Baugruppen ableiten um damit bspw. Serviceintervalle dynamisch anzupassen ("Predictive Maintenance"). Zusätzlich bieten die ermittelten Prozessdaten dem Bearbeiter, Bediener oder der die Werkzeugmaschine einsetzenden Firma die Möglichkeit durch mehr Transparenz die Bearbeitung von Werkstücken an der Werkzeugmaschine zu optimieren.

Dies ermöglicht es einerseits vorteilhaft Maschinenzustände darzustellen bzw. anzuzeigen als auch eine Historie von Sensorsignalen bzw. Sensorikdaten an der Werkzeugmaschine als Funktion der Zeit (Zeitverlauf) darzustellen, zu plotten oder auszuwerten. Dies ermöglicht eine vorteilhafte effiziente Detektion von Problemstellen. Weiterhin können die gesammelten Sensorikdaten und weitere Informationen über einen zeitlichen Verlauf des Maschinenzustands vorteilhaft für Vorhersagen genutzt werden. So ist es zum Beispiel möglich, einen Verschleißgrad einzelner Komponenten und letztlich die zu erwartende Restlebensdauer anzuzeigen. Dies kann z.B. für reine Verbrauchsmittel (z.B. Schmiermitteltanks) anhand von Füllständen angedacht sein. Zudem können zusätzliche Sensorpakete (z.B. Qualitätssensoren oder spez. Sensoren für Condition Monitoring) angeboten werden, um die vorhandenen Sensordaten der Werkzeugmaschine um weitere Sensordaten aufzurüsten.

Hierbei wird erfindungsgemäß in Ausführungsbeispielen eine Datenschnittstellenvorrichtung mit einer Datenverarbeitungseinrichtung zum Einsatz an einer numerisch gesteuerten Werkzeugmaschine vorgeschlagen, die auf Basis von ausgelesenen Sensorikdaten aus der Werkzeugmaschine Datensätze berechnen kann und an externe Datenverarbeitungsvorrichtungen übertragen kann, um z.B. für eine und auch mehrere verbundene Werkzeugmaschinen eine Zustandsanalyse oder auch Zustandsanzeige auf Basis der gesammelten Sensorikdaten zu ermöglichen. Dies kann eine Plotterfunktion zum Anzeigen eines Zeitverlaufs einer oder mehrerer Sensorsignale, eine Prozessanalyse (z.B. Suche nach Ereignissen, wie z.B. Grenzwertüberschreitungen einzelner oder mehrerer Sensorsignale) auf Basis von über einen vorbestimmten Zeitraum gesammelten Sensorikdaten, eine historienbasierte Programmanalyse, und/oder Vorhersagen für Wartungs- oder Ersatzteilaustauschbedarf umfassen, z.B. auf Basis von füllstandsanzeigenbasierten und/oder zählerbasierten Restlebensdauervorhersagen für Komponenten und Teile der Werkzeugmaschinen sowie erforderliche Verbrauchsmittel (z.B. Filterwechsel, Kühlschmiermittelwechsel oder erforderliche Nachfüllaktionen für Verbrauchsmittel) auf Basis von automatisierten Analysen der gesammelten Sensorikdaten.

Im Folgenden werden zunächst allgemeine Beispiele beschrieben, die Aspekte der vorstehenden Zusammenfassung aufgreifen, weiterentwickeln oder wiederholen, und in jedem Falle stets mit Aspekten der vorstehenden Zusammenfassung und Aspekten der darauffolgenden Figurenbeschreibung kombinierbar sind.

Die verfügbaren Sensoren an der Werkzeugmaschine und die Verfügbarkeit der Sensorwerte an der Steuerung kann maschinentypisch und/oder steuerungstypisch sehr unterschiedlich ausfallen.

Hierzu kann beispielhaft vorgesehen sein, in Konfigurationsdaten zum Auslesen und Verarbeiten der Sensorikdaten modifizierbar festzulegen, welche Sensoren an der Werkzeugmaschine verfügbar sind bzw. ausgelesen werden sollen, und wie die jeweiligen Sensorwerte ausgelesen werden (z.B. durch Festlegen vorbestimmter individueller Ausleseraten) und/oder wie die ausgelesenen Sensorwerte verarbeitet und gespeichert (Verarbeitungsregeln) werden sollen.

Auf Basis der individuell konfigurierbaren Konfigurationsdaten kann die Datenschnittstellenvorrichtung beispielhaft vielseitig genutzt werden und an Maschinen mit umfangreichen Sensorpaket mit einer Vielzahl von optionalen Sensoren eingesetzt werden, aber auch an Bestandsmaschinen nachgerüstet werden, indem die Konfigurationsdaten es ermöglichen, je nach Art und Anzahl der verfügbaren Sensoren und steuerungsabhängiger Auslesemöglichkeiten die Auslesefunktion und Weiterverarbeitungsfunktion individuell an die jeweilige Maschine und deren Steuerung bzw. an den Bedarf anpassend zu konfigurieren, und dennoch die Sensorikdaten maschinen- und steuerungsunabhängig über an weitere Datenverarbeitungseinrichtungen mit unterschiedlichen M2M Protokollen zu übertragen.

Die Konfigurationsdaten können z.B. in einer Konfigurationsdatei in einem universellen Datenformat in einer Markup-Sprache (z.B. als XML-Datei) hinterlegt werden.

Die Konfigurationsdaten können für Zertifizierungszwecke zudem die Sensorsignalkanäle angeben, die einer Zertifizierung zugeführt werden müssen, d.h. welche Sensorsignale bzw. welche Ereignisse im Zusammenhang mit welchen Sensorsignalen in Zertifizierungsdaten zu speichern sind.

Gemäß einem bevorzugten Aspekt kann die Datenverarbeitungseinrichtung dazu eingerichtet sein, die in dem ersten Speichermedium gespeicherten Sensorikdaten zur Datenübertragung zu komprimieren und/oder zu verschlüsseln. Dies hat den Vorteil, dass eine Datensicherheit bei Übertragung als auch eine Vermeidung von unberechtigtem Zugriff ermöglicht wird, als auch eine effiziente Datenspeicherung komprimierter Daten für Langzeitspeicheru ngszwecke.

Gemäß einem beispielhaften Aspekt kann die Datenverarbeitungseinrichtung dazu eingerichtet sein, berechnete Datensätze, in dem ersten Speichermedium gespeicherte Datensätze und über einen vorbestimmten Zeitraum gesammelte Sensorikdaten bzw. die Sensorikdaten aufweisende Datensätze über ein lokales oder globales Netzwerk zu übertragen. In der Zwischenzeit können die Daten puffernd an der Datenspeichereinrichtung gespeichert werden (auch aus Sicherheitsgründen, um Datenverlust bei Netzwerkproblemen zu vermeiden) und zudem ermöglicht dies die einfache und kontrollierte, ggf. automatische Übertragung von Daten in Paketen z.B. zu vorbestimmten Zeitintervallen oder Datenvolumina und ggf. zu vorbestimmten Zeitpunkten.

Gemäß einem bevorzugten Aspekt können die übertragenen Sensorikdaten und/oder Datensätze zudem einen Maschinentyp der Werkzeugmaschine, eine Maschinenkonfiguration der Werkzeugmaschine und/oder Maschinenidentifikationsdaten, die insbesondere eine Maschinennummer umfassen, der Werkzeugmaschine angeben. Dies hat den Vorteil, dass ein Vergleich und eine Identifikation der Werkzeugmaschine bzw. der Arbeitsbedingungen der Werkzeugmaschine oder des Maschinentyps vereinfacht ist, insbesondere bei analysierendem Vergleich der Daten unterschiedlicher Maschinen.

Gemäß einem bevorzugten Aspekt kann die Kommunikationseinheit eine Webschnittstelle und/oder eine Webservice-Applikation bereitstellen, über die einer externen Datenverarbeitungsvorrichtung bevorzugt mittels eines Webbrowsers und/oder einer Web-Applikation Zugriff auf in dem ersten Speichermedium gespeicherte, aggregierte Sensorikdaten gewährbar ist. In diesem Fall kann ein Internet-Kommunikationsprotokoll in der zweiten Gruppe von Kommunikationsprotokollen umfasst sein. Dies hat den Vorteil, dass Anzeige und Analyse der Daten einfach und effizient über Webschnittstellen und Webbrowser-Zugriff ermöglicht ist, so dass auch eine Vielzahl von externen Datenverarbeitungsvorrichtungen (z.B. Computer, Notebooks, Tablets, Smartphones) einfach und universell mittels einer Web-Applikation und/oder über einen Link mittels eines Webbrowsers auf die Daten zugreifen können, diese anzeigen und/oder analysieren können.

Gemäß einem bevorzugten Aspekt können die Konfigurationsdaten weiterhin ein Datenformat angeben, und die Datenverarbeitungseinrichtung kann ausgelesene, umgerechnete, aggregierte oder berechnete Daten bevorzugt in dem in den Konfigurationsdaten angegebenen Datenformat in dem ersten Speichermedium speichern. Dies hat den Vorteil, dass ein universelles aber auch universell konfigurierbares Datenformat ermöglicht wird, auch bei unterschiedlichen Maschinen- und Steuerungskonfigurationen bzw. Sensorverfügbarkeiten, so dass maschinenunabhängig und steuerungsunabhängig Sensorikdaten für den universellen Zugriff durch eine Vielzahl von unterschiedlichen externen Datenverarbeitungsvorrichtungen in einem universellen Datenformat bereitgestellt werden können.

Gemäß einem bevorzugten Aspekt kann die Kommunikationseinheit mit einer Mensch-Maschine-Schnittstelle der Steuereinrichtung der Werkzeugmaschine verbindbar sein, bevorzugt zum Übertragen von in dem ersten Speichermedium gespeicherten Daten zu der Mensch-Maschine-Schnittstelle, bevorzugt zur Anzeige auf einer graphischen Benutzeroberfläche der Mensch-Maschine-Schnittstelle der Steuereinrichtung der Werkzeugmaschine. Dies hat den Vorteil, dass die Daten auch an einer Mensch-Maschine-Schnittstelle der Steuerung angezeigt, ausgelesen, analysiert bzw. eingesehen werden können, so dass einem Bediener direkt an der Werkzeugmaschine ermöglicht ist, auf Basis der Anzeige und/oder Analyse der Sensorik- und/oder Zertifizierungsdaten die Maschinensteuerung zu bedienen.

Gemäß einem bevorzugten Aspekt kann das erste Speichermedium einen Ringpuffer umfassen, und die ausgelesenen und/oder berechneten Daten und/oder erzeugte Datensätze können bevorzugt in dem Ringpuffer gespeichert werden. Dies hat den Vorteil, dass nach einem vorbestimmten Datenvolumen, insbesondere nach Übertragung der Daten an eine externe Datenverarbeitungsvorrichtung, Datenspeicher für neu gesammelte Daten zur Verfügung steht. Bevorzugt ist das im Ringpuffer zur Verfügung zu stellende Datenspeichervolumen konfigurierbar, z.B. über die Konfigurationsdaten.

Gemäß einem bevorzugten Aspekt kann die Datenverarbeitungseinrichtung weiterhin dazu eingerichtet sein, Sensorikdaten zusammen mit einem entsprechenden Zeitstempel in dem ersten Speichermedium zu speichern. Dies hat den Vorteil, dass eine Analyse ermöglicht wird und eine Datenhistorie aufzeichenbar ist.

Gemäß einem bevorzugten Aspekt können die Ausleseregeln der Konfigurationsdaten für ein, mehrere oder alle Sensorsignale der in den Konfigurationsdaten angegebenen Gruppe von Sensoren der Werkzeugmaschine eine individuelle Auslesefrequenz angeben. Bevorzugt ist die Ausleseeinheit dann dazu eingerichtet, für ein entsprechendes Sensorsignal Sensorsignalwerte mit der entsprechenden in den Konfigurationsdaten angegebenen individuellen Auslesefrequenz auszulesen. Dies hat den Vorteil, dass jeweils individuelle Sensorsignalausleseraten je nach Bedarf konfiguriert werden können.

Gemäß einem bevorzugten Aspekt kann zumindest eine in den Konfigurationsdaten angegebene individuelle Auslesefrequenz kleiner sein, als eine Sensorwertspeicherfrequenz einer speicherprogrammierbaren Steuerung und/oder als eine Sensorwertspeicherfrequenz einer NC-Steuerung der Steuereinrichtung. Dies ermöglicht vorteilhaft eine steuerungsunabhängigere universelle Auslesecharakteristik.

Gemäß einem bevorzugten Aspekt können die Verarbeitungsregeln der Konfigurationsdaten für ein, mehrere oder alle Sensorsignale der in den Konfigurationsdaten angegebenen Gruppe von Sensoren der Werkzeugmaschine eine individuelle Verarbeitungsregel angeben. Bevorzugt kann dann die Datenverarbeitungseinrichtung dazu eingerichtet sein, für ein entsprechendes Sensorsignal aus einer Mehrzahl von über einen in der individuellen Verarbeitungsregel vorgegebenen Zeitraum ausgelesenen Sensorsignalwerten anhand der entsprechenden in den Konfigurationsdaten angegebenen individuellen Verarbeitungsregel einen einzelnen Sensorikwert zu berechnen und in dem ersten Speichermedium zu speichern. Dies hat den Vorteil, dass Verarbeitungsregeln je nach Bedarf aber auch zur Reduzierung des zu speichernden Datenvolumens konfiguriert werden können, z.B. durch Aggregation mehrerer Signalwerte eines Sensors zu einem zu speichernden Signalwert.

Gemäß einem bevorzugten Aspekt kann eine individuelle Verarbeitungsregel angeben, dass der Sensorikwert als Mittelwert der Mehrzahl von über einen in der individuellen Verarbeitungsregel vorgegebenen Zeitraum ausgelesenen Sensorsignalwerten zu berechnen ist, und/oder eine individuelle Verarbeitungsregel kann angeben, dass der Sensorikwert als Maximalwert oder Minimalwert der Mehrzahl von über einen in der individuellen Verarbeitungsregel vorgegebenen Zeitraum ausgelesenen Sensorsignalwerten zu berechnen ist. Auch Umrechnungen von Einheiten von Parametern in andere Einheitssysteme kann ermöglicht werden.

Gemäß einem bevorzugten Aspekt können die Verarbeitungsregeln der Konfigurationsdaten für zumindest zwei Sensorsignale der in den Konfigurationsdaten angegebenen Gruppe von Sensoren der Werkzeugmaschine eine Kombinationsregel angeben. Die Datenverarbeitungseinrichtung kann dann dazu eingerichtet sein, für Sensorwerte der zumindest zwei Sensorsignale auf Grundlage der Kombinationsregel einen kombinierten Sensorikwert zu berechnen und in dem ersten Speichermedium zu speichern. Dies hat den Vorteil, dass Verarbeitungsregeln je nach Bedarf aber auch zur Reduzierung des zu speichernden Datenvolumens konfiguriert werden können, z.B. durch Kombination mehrerer Signalwerte mehrerer Sensoren zu einem zu speichernden Signalwert (z.B. betreffend mehrere eine gleiche Maschinenkomponente betreffende Sensorsignale).

Gemäß einem bevorzugten Aspekt können die Konfigurationsdaten für ein, mehrere oder alle Sensorsignale der in den Konfigurationsdaten angegebenen Gruppe von Sensoren der Werkzeugmaschine Zertifizierungsregeln umfassen. Die Datenverarbeitungseinrichtung kann zudem dazu eingerichtet sein, auf Grundlage der in den Konfigurationsdaten angegebenen Zertifizierungsregeln und auf Basis der entsprechenden ausgelesenen Sensorsignale Zertifizierungsdaten zu erzeugen und die erzeugten Zertifizierungsdaten zu speichern. Dies hat den Vorteil, dass Sensorikdatenspeicherung mit einer etwaigen erforderlichen Zertifizierung der Prozesse auf einfache Weise und effizient kombiniert werden kann. Die Zertifizierung muss somit nicht nachträglich auf Basis der gespeicherten Sensorikdaten erfolgen.

Gemäß einem bevorzugten Aspekt können die Zertifizierungsdaten angeben, zu welchem Zeitpunkt und/oder an welcher Position eines an der Steuereinrichtung der Werkzeugmaschine ausgeführten NC-Programms eines oder mehrere der in den Zertifizierungsregeln angegebenen Sensorsignale einen entsprechenden Grenzwert überschritten hat. Alternativ bzw. zusätzlich, z.B. wenn kein Grenzwert überschritten wurde, kann angegeben werden, dass keines der in den Zertifizierungsregeln angegebenen Sensorsignale während eines vorgegebenen Zeitraums oder während dem Ausführen des NC-Programms den entsprechenden Grenzwert überschritten hat.

Gemäß einem bevorzugten Aspekt kann die Kommunikationseinheit dazu eingerichtet sein, der externen Datenverarbeitungsvorrichtung Zugriff auf in dem zweiten Speichermedium gespeicherte Konfigurationsdaten zu gewähren, insbesondere bevorzugt zur Modifikation der Konfigurationsdaten. Dies hat den Vorteil, dass die Konfigurationsdaten je nach Bedarf konfigurierbar sind, z.B. wenn andere oder zusätzliche Auslese- oder Verarbeitungsregeln gesetzt werden sollen, oder auch wenn die Maschine mit Sensoren nachgerüstet wird oder die Steuerung erweitert wird.

Gemäß einem bevorzugten Aspekt können die Konfigurationsdaten für ein, mehrere oder alle Sensorsignale der in den Konfigurationsdaten angegebenen Gruppe von Sensoren der Werkzeugmaschine einen oder mehrere individuelle Grenzwerte angeben. Die Datenverarbeitungseinrichtung kann dazu eingerichtet sein, zu berechneten Sensorikwerten dazugehörige, in den Konfigurationsdaten angegebene Grenzwerte in dem ersten Speichermedium zu speichern. Dies erleichtert die spätere Analyse der Daten, da der dazugehörige Grenzwert jeweils mitgespeichert wird.

Gemäß einem bevorzugten Aspekt kann eine Ausleseeinheit der Steuerungsschnittstelleneinheit dazu eingerichtet sein, bzw. die Datenverarbeitungseinrichtung über die Steuerungsschnittstelleneinheit Zählerstandswerte aus Registern einer speicherprogrammierbaren Steuerung der Steuereinrichtung der Werkzeugmaschine auszulesen.

Gemäß einem bevorzugten Aspekt kann die Datenverarbeitungseinrichtung weiterhin dazu eingerichtet sein, ausgelesene Zählerstandswerte in dem ersten Speichermedium zu speichern, insbesondere bevorzugt zusammen mit einem Zeitstempel.

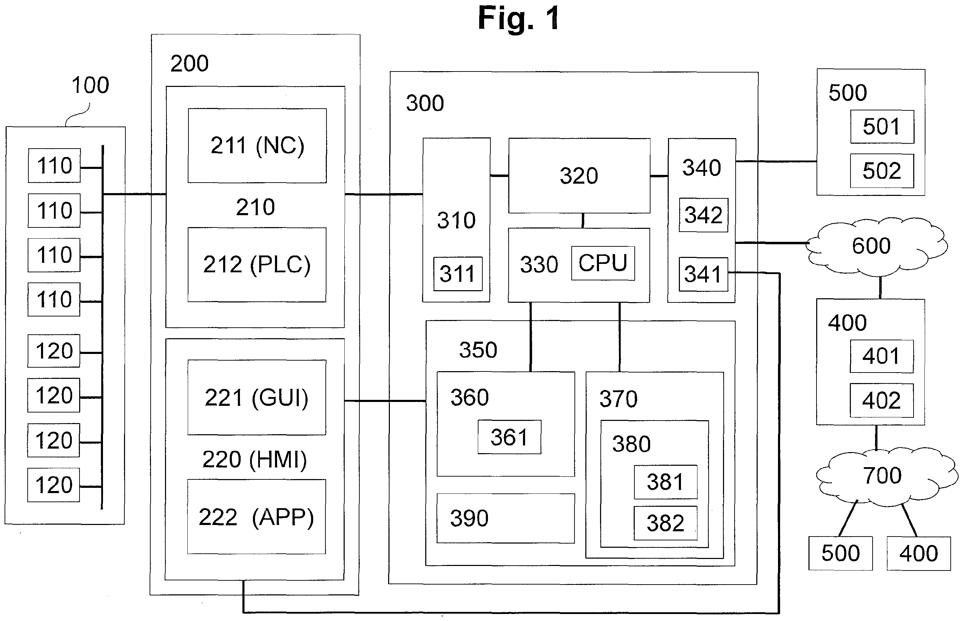

Fig. 1 zeigt eine beispielhafte schematische Darstellung eines Systems mit einer Datenspeichervorrichtung gemäß einem Ausführungsbeispiel der Erfindung.

Das System umfasst die Datenschnittstellenvorrichtung 300, eine Werkzeugmaschine 100, eine Steuereinrichtung 200 der Werkzeugmaschine 100 und eine externe Datenverarbeitungsvorrichtung 400.

Die Werkzeugmaschine 100 umfasst beispielhaft eine Mehrzahl von durch die Steuereinrichtung 200 steuerbaren Aktoren 110 der Werkzeugmaschine 100 und eine Mehrzahl von Sensoren 120 zur Ausgabe von einen Maschinenzustand der Werkzeugmaschine 100 betreffenden Sensorsignalen an die Steuereinrichtung 200.

Die Aktoren 110 können z.B. Antriebe von steuerbaren Linear- und Rundachsen (Schwenk- und/oder Drehachsen) für eine gesteuerte Relativbewegung zwischen Werkzeug und Werkstück umfassen, und auch Antriebe von werkzeugtragenden Arbeitsspindeln (z.B. an Fräsmaschinen) bzw. werkstücktragenden Arbeitsspindeln (z.B. an Drehmaschinen). Des Weiteren können die Aktoren 110 elektronisch, hydraulisch und/oder pneumatisch gesteuerte Ventile, Pumpen oder andere Zuführeinrichtungen von interner oder externer Kühlschmierstoffzuführung bzw. Druckluftzuführungen sein. Fördereinrichtungen, Palettenwechsler, Werkstückwechlser, Werkzeugmagazine und anderes Werkzeugmaschinenzubehör kann zudem über Antriebe oder Schaltungen bzw. entsprechende Aktoren gesteuert werden.

Die Sensoren 120 können z.B. Sensoren sein, die jeweiligen Baugruppen oder Komponenten der Werkzeugmaschine zugeordnet sein können, z.B. den Achsen, den Antrieben, Achslagern, den Spindeln, Spindellagern, einem Werkzeugmagazin, einem Werkzeugwechsler, einem Paletten- oder Werkstückwechsler, einer internen oder externe Kühlschmiermittelzuführeinrichtung, einer Spänefördereinrichtung, und/oder einer Hydraulik- und/oder Pneumatik-Steuerung. Zu den einzelnen Baugruppen können z.B. eine Vielzahl von unterschiedlichen Sensoren bereitgestellt werden, so z.B. Positionsmesssensoren, Strom- und/oder Spannungsmesssensoren, Temperatursensoren, Kraftsensoren, Beschleunigungssensoren, Vibrationssensoren, Lagerdiagnosesensoren, Verlagerungssensoren, Füllstandsanzeigesensoren, Flüssigkeitssensoren (z.B. zum Messen von PH-Werten in Kühlschmiermittelflüssigkeiten, Wasseranteilmesssensoren für Öl, Kühlmittel etc.), Wassergehaltsensoren in Pneumatiksystemen, und/oder Filterzustandssensoren.

Die verfügbaren Sensoren an der Werkzeugmaschine und die Verfügbarkeit der Sensorwerte an der Steuerung kann hierbei maschinentypisch und/oder steuerungstypisch sehr unterschiedlich ausfallen.

Hierzu sieht die Erfindung beispielhaft vor, in Konfigurationsdaten zum Auslesen und Verarbeiten der Sensorikdaten modifizierbar festzulegen, welche Sensoren an der Werkzeugmaschine verfügbar sind bzw. ausgelesen werden sollen, und wie die jeweiligen Sensorwerte ausgelesen werden (z.B. durch Festlegen vorbestimmter individueller Ausleseraten) und/oder wie die ausgelesenen Sensorwerte verarbeitet und gespeichert (Verarbeitungsregeln) werden sollen.

Auf Basis der individuell konfigurierbaren Konfigurationsdaten kann die erfindungsgemäße Datenspeichereinheit vielseitig genutzt werden und an Maschinen mit umfangreichen Sensorpaket mit einer Vielzahl von optionalen Sensoren eingesetzt werden, aber auch an Bestandsmaschinen nachgerüstet werden, indem die Konfigurationsdaten es ermöglichen, je nach Art und Anzahl der verfügbaren Sensoren und steuerungsabhängiger Auslesemöglichkeiten die Auslesefunktion und Weiterverarbeitungsfunktion der Datenspeichereinheit individuell an die jeweilige Maschine und deren Steuerung bzw. an den Bedarf anpassend zu konfigurieren, und dennoch die Sensorikdaten maschinen- und steuerungsunabhängig über die Datenschnittstellenvorrichtung 300 an weitere (externe) Datenverarbeitungsvorrichtungen zu übertragen.

Die Konfigurationsdaten könne z.B. in einer Konfigurationsdatei in einem universellen Datenformat in einer Markup-Sprache (z.B. als XML-Datei) hinterlegt werden.

Die Steuereinrichtung 200 umfasst beispielhaft eine Steuerung 210 mit einer NC-Steuerung 211 und einer speicherprogrammierbaren Steuerung 212 (auch SPS oder PLC für "Programmable Logic Control" genannt).

Weiterhin umfasst die Steuereinrichtung 200 beispielhaft eine Mensch-Maschine-Schnittstelle 220 (auch HMI für "Human-Machine-Interface" genannt), mit der es einem Bediener der Werkzeugmaschine 100 ermöglicht ist, die Werkzeugmaschine 100 zu steuern, zu überwachen und/oder zu bedienen. Die Mensch-Maschine-Schnittstelle 220 umfasst beispielhaft eine auf einem Monitor oder Touchscreen anzeigbare graphische Benutzeroberfläche 221 (auch GUI für "Graphical User Interface" genannt).

Die Datenschnittstellenvorrichtung 300 umfasst beispielhaft eine erste Schnittstelleneinheit 310 (Steuerungsschnittstelleneinheit), eine Ausleseeinheit 320, eine beispielhaft prozessorgesteuerte Datenverarbeitungseinheit 330, eine zweite Schnittstelleneinheit 340 (Kommunikationseinheit), sowie einen Datenspeicher 350 (Datenspeichereinrichtung) mit einem zweiten Speichermedium 360 und einem ersten Speichermedium 370.

Das zweite (bevorzugt nichtflüchtige) Speichermedium 360 (z.B. ein NVRAM, eine Festplatte oder ein Flash-Speicher bzw. SSD-Speicher) speichert beispielhaft Konfigurationsdaten 361, die beispielhaft eine Gruppe von Sensoren 120 der Werkzeugmaschine 100 sowie Auslese- und Verarbeitungsregeln für Sensorsignale der Gruppe von Sensoren 120 der Werkzeugmaschine 100 angeben, und das erste Speichermedium 370 (z.B. eine oder mehrere Festplatten und/oder Flash-Speicher) umfasst beispielhaft eine Datenbank bzw. Datenspeichereinrichtung 380 zum Speichern von Sensorikdaten 381 (bzw. berechnete Datensätze) und Zertifizierungsdaten 382, bzw. zum Speichern von Daten und/oder Datensätzen, die von der Datenverarbeitungseinheit 330 berechnet, erstellt, erzeugt oder umgerechnet wurden.

Die Datenspeichereinrichtung 350 umfasst beispielhaft weiterhin eine Datenschnittstelle 390, die dazu eingerichtet ist, die in dem ersten Datenspeichermedium 370 gespeicherten Daten zur Datensicherung und/oder Langzeitspeicherung an eine extern verbundene Datenspeichervorrichtung 800 zu übertragen, insbesondere bevorzugt gemäß einer synchronen, asynchronen, in regelmäßigen Abständen durchgeführten oder bei Überschreiten eines Grenzwerts der in dem ersten Datenspeichermedium gespeicherten Datenmenge durchgeführten Datenübertragung bzw. Datenspiegelung.

Die Ausleseeinheit 320 ist beispielhaft dazu eingerichtet, Sensorsignalwerte der Sensorsignale der in den Konfigurationsdaten angegebenen Gruppe von Sensoren 120 der Werkzeugmaschine 110 über die erste Schnittstelleneinheit 310 (Steuerungsschnittstelleneinheit) aus der Steuereinrichtung 210 (z.B. aus Registern der PLC 212) auszulesen, insbesondere beispielhaft auf Grundlage der der in den Konfigurationsdaten angegebenen Ausleseregeln.

Die Datenverarbeitungseinheit 330 ist beispielhaft dazu eingerichtet, die mittels der Ausleseeinheit ausgelesenen Sensorsignalwerte roh zu speichern, zu berechneten, umgerechneten, oder aggregierten Sensorikdaten zu verarbeiten, insbesondere beispielhaft auf Grundlage der in den Konfigurationsdaten angegebenen Verarbeitungsregeln, und die verarbeiteten, aggregierten Sensorikdaten 361 in dem zweite Speichermedium 380 der Datenbank 380 zu Speichern.

Die zweite Schnittstelleneinheit 340 (Kommunikationseinheit) ist beispielhaft zur Datenübertragung mit einer externen Datenverarbeitungseinrichtung eingerichtet.

Als Beispiel für derartige externe Datenverarbeitungseinrichtungen ist in Fig. 1 beispielhaft gezeigt, dass die zweite Schnittstelleneinheit 340 mit der Mensch-Maschine-Schnittstelle 220 der Steuereinrichtung 200 verbunden ist, derart, dass beispielhaft ein Bediener mittels einer Applikation 222 und der graphischen Benutzeroberfläche 221 der Mensch-Maschine-Schnittstelle 220 Sensorikdaten 381 angezeigt bekommen kann bzw. auf die Sensorikdaten 381 zugreifen kann, und/oder über die graphische Benutzeroberfläche 221 die Konfigurationsdaten 361 einsehen bzw. bei Bedarf modifizieren kann, z.B. um die Auslese- und/oder Verarbeitungsregeln zu verändern bzw. einzusehen. Auch kann die Gruppe der auszulesenden Sensoren 120 eingesehen bzw. verändert werden.

Als weiteres Beispiel derartiger externer Datenverarbeitungseinrichtungen ist in Fig. 1 beispielhaft gezeigt, dass die zweite Schnittstelleneinheit 340 (Kommunikationseinheit) mit einer Computereinrichtung 500 (z.B. ein externer PC, ein Notebook, ein Smartphone oder ein Tablet) verbunden ist, die eine Applikation 502 und einen Webbrowser 501 umfasst, dass beispielhaft ein Bediener mittels der Applikation 502 (beispielhaft eine Web-Applikation) und/oder mittels des Webbrowsers 501 Sensorikdaten 381 angezeigt bekommen kann bzw. auf die Sensorikdaten 381 zugreifen kann, und/oder die Konfigurationsdaten 361 einsehen bzw. bei Bedarf modifizieren kann, z.B. um die Auslese- und/oder Verarbeitungsregeln zu verändern bzw. einzusehen. Auch kann die Gruppe der auszulesenden Sensoren 120 eingesehen bzw. verändert werden. Hierzu umfasst die erste Schnittstelleneinheit beispielhaft eine der Applikation 502 entsprechende Web-Service-Applikation 341 (die als Service-Applikation bzw. Server-Applikation den Web-Applikationen Zugang gewähren kann, z.B. den Applikationen 222 und/oder 502).

Als weiteres Beispiel derartige externe Datenverarbeitungseinrichtungen ist in Fig. 1 beispielhaft gezeigt, dass die zweite Schnittstelleneinheit 340 über ein lokales oder globales Netzwerk 600 mit einem Server 400 umfassend eine Web-Service-Applikation 401 (z.B. analog zu der Web-Service-Applikation 341) verbunden ist. Der Server 400 kann über die Schnittstelleneinheit 340 (Kommunikationseinheit) Sensorikdaten 381 und auch Zertifizierungsdaten 382 anfordern bzw. übertragen bekommen und lokal auf dem Server 400 in einem Speichermedium 402 (z.B. Festplatten, Flash-Speicher, Cloud-Speicher, externe Storage-Arrays, etc.) speichern (z.B. in größeren Datenmengen, wenn das Speichermedium 370 zum Speichern der Sensorikdaten 381 einen Ringpuffer umfasst, und/oder auch zum Speichern von Sensorikdaten 381 von mehreren Werkzeugmaschinen 100, deren Steuerungen 210 jeweils mit einer entsprechenden Datenspeichereinrichtung 300 verbunden ist).

Über ein weiteres lokales oder globales Netzwerk 700 (z.B. ein LAN, WAN, ein Intranet oder das Internet) kann an den Server 400 ein weiterer Server 400 und/oder eine weitere Computereinrichtung 500 verbunden sein.

Gemäß beispielhaften Aspekten ist die Datenschnittstellenvorrichtung 300 gemäß Fig. 1 wie folgt eingerichtet.

Die Konfigurationsdaten 361 geben ein von der Steuereinrichtung 200 der Werkzeugmaschine 100 verwendetes Kommunikationsprotokoll aus einer ersten Gruppe von Kommunikationsprotokollen und die von den externen Datenverarbeitungsvorrichtungen 400 bzw. 500 verwendeten Kommunikationsprotokollen aus einer zweiten Gruppe von Kommunikationsprotokollen an. Die Steuerungsschnittstelleneinheit 310 ist dazu eingerichtet, zur Datenübertragung jedes der Kommunikationsprotokolle aus der ersten Gruppe von Kommunikationsprotokollen zu verwenden und für die Datenübertragung mit der Steuereinrichtung 200 der Werkzeugmaschine 100 auf Grundlage der Konfigurationsdaten 361 das von der Steuereinrichtung 200 der Werkzeugmaschine 100 verwendete Kommunikationsprotokoll auszuwählen.

Die Kommunikationseinheit 340 ist dazu eingerichtet, zur Datenübertragung jedes der Kommunikationsprotokolle aus der zweiten Gruppe von Kommunikationsprotokollen zu verwenden und für die Datenübertragung mit einer externen Datenverarbeitungsvorrichtung auf Grundlage der Konfigurationsdaten 361 das von der jeweiligen externen Datenverarbeitungsvorrichtung verwendete Kommunikationsprotokoll auszuwählen.

Hierbei sind in der ersten Gruppe von Kommunikationsprotokollen insbesondere bevorzugt mehrere von Werkzeugmaschinensteuerungen verschiedener Hersteller oder Steuerungsversionen unterstützte Kommunikationsprotokolle umfasst, wie z.B. auf OPC basierende Kommunikationsprotokolle, auf UDI basierende Kommunikationsprotokolle, und/oder auch proprietäre Kommunikationsprotokolle, die z.B. jeweils von unterschiedlichen Werkzeugmaschinensteuerungen unterschiedener Hersteller unterstützt werden, ggf. von NC/PLC-Steuerungssystemen von Siemens, Heidenhain, Fanuc, Mitsubishi etc.

Weiterhin sind in der zweiten Gruppe von Kommunikationsprotokollen insbesondere bevorzugt mehrere M2M-Kommunikationsprotokolle ("M2M" für Machine-to-Machine bzw. Maschine-zu-Maschine), ggf. einschließlich sog. universeller M2M-Kommunikations-protokolle umfasst, wie z.B. auf OPC UA basierende Kommunikationsprotokolle, auf MQTT basierende Kommunikationsprotokolle, auf MTConnect basierende Kommunikationsprotokolle, und/oder auf AMPQ basierende Kommunikationsprotokolle umfasst.

Es sei darauf hingewiesen, dass die erste und zweite Gruppe von Kommunikationsprotokollen nur jeweils unterschiedliche Kommunikationsprotokolle umfassen können, jedoch auch überlappen können in dem Sinne, dass ein oder mehrere Kommunikationsprotokolle der einen Gruppe auch in der anderen Gruppe umfasst sind.

Die Datenverarbeitungseinrichtung 330 ist beispielhaft dazu eingerichtet, Datensätze eines vorbestimmten, von den Kommunikationsprotokollen der ersten und zweiten Gruppen unabhängigen Datenformats zu erzeugen, insbesondere auf Grundlage der von über die Steuerungsschnittstelleneinheit 310 empfangenen Daten, auf Grundlage der von der Datenverarbeitungseinrichtung 330 verarbeiteten Daten und auf Grundlage der von der Datenspeichereinrichtung 350 gespeicherten Daten.

In bevorzugten Beispielen umfasst jeder erzeugte Datensatz Identifikationsdaten, die betreffend den erzeugten Datensatz zugrundeliegenden Daten eine Identität einer oder mehrerer Werkzeugmaschinen, eine Identität einer oder mehrerer Werkzeugmaschinenbauteile und/oder eine Identität eines oder mehrerer Sensoren angeben; und jeder erzeugte Datensatz gibt bevorzugt Wertdaten und einen oder mehrere mit den Wertdaten assoziierte Zeitstempel an, wobei die Wertdaten Datenwerte angeben, die einen oder mehrere Sensorsignal- und/oder Steuersignalwerte, einen oder mehrere aus mehreren Signalwerten berechnete Datenwerte und/oder einen oder mehrere einen Maschinenzustand einer oder mehrerer Werkzeugmaschinen angebende Zustandswerte. Zudem kann für jeden Datensatz und/oder für jeden Wert der Wertdaten ein Datentyp angegeben sein, wobei der Datentyp beispielhaft angibt, ob der entsprechende Wert einen Maschinenstatus, einen Signalwert oder ein Betriebsereignis bei dem Betrieb einer entsprechenden Werkzeugmaschine beschreibt.

Weiterhin kann die Datenverarbeitungseinrichtung 330 auf Basis von in dem zweiten Speichermedium 360 gespeicherten Signaturdaten dazu eingerichtet sein, einem erzeugten Datensatz eine elektronische Signatur anzufügen und/oder an Datensätzen angefügte Signaturen zu überprüfen und/oder auf Basis von in dem zweiten Speichermedium 360 gespeicherten Verschlüsselungsdaten dazu eingerichtet sein, einen erzeugten Datensatz zu verschlüsseln und/oder verschlüsselte Datensätze auf Basis von in dem zweiten Speichermedium 360 gespeicherten Verschlüsselungsdaten zu entschlüsseln.

Die Kommunikationseinheit 340 ist beispielhaft dazu eingerichtet, für die Datenübertragung mit den externen Datenverarbeitungsvorrichtungen 400 bzw. 500 ein Datenpaket mit Header-Daten und Nutzdaten zu erzeugen, wobei die Header-Daten auf Grundlage des von der jeweiligen externen Datenverarbeitungsvorrichtung verwendeten Kommunikationsprotokolls erzeugt werden und die Nutzdaten einen oder mehrere von der Datenverarbeitungseinrichtung 330 erzeugte Datensätze des von den Kommunikationsprotokollen der ersten und zweiten Gruppen unabhängigen Datenformats umfassen.

Die Steuerungsschnittstelleneinheit 310 ist beispielhaft dazu eingerichtet, für die Datenübertragung mit der Steuereinrichtung 200 ein Datenpaket mit Header-Daten zu erzeugen, wobei die Header-Daten auf Grundlage des von der Steuereinrichtung 200 verwendeten Kommunikationsprotokolls erzeugt werden.

Die Datenverarbeitungseinrichtung 330 kann einen oder mehrere Datensätze in regelmäßigen Zeitintervallen, die insbesondere in den Konfigurationsdaten 361 angegeben sein können, auf Basis von in den Konfigurationsdaten 361 angegebenen Verarbeitungsregeln zu erzeugen und an die Kommunikationseinheit 340 zu senden, insbesondere mit einer Instruktion, die den einen oder die mehreren Datensätze in einem oder mehreren Datenpaketen gemäß einem oder mehreren Kommunikationsprotokollen der zweiten Gruppe zu übertragen.

In weiteren Beispielen kann die Kommunikationseinheit 340 dazu eingerichtet sein, die einen oder die mehreren Datensätze in einem oder mehreren Datenpaketen gemäß einem oder mehreren Kommunikationsprotokollen der zweiten Gruppe an mehrere verbundene externe Datenverarbeitungsvorrichtungen gemäß eines Publish-Subscriber-Modells zu übertragen, wobei die Konfigurationsdaten 361 insbesondere Subscriberidentifikationsdaten umfassen, die einen oder mehrere der verbundenen externe Datenverarbeitungsvorrichtungen als eingeschriebene Subscriber angeben.

Besonders zweckmäßig ist in Fig. 1 beispielhaft vorgesehen, dass die Kommunikationseinheit 340 eine Datensatz-Ausgabeeinheit 342 aufweist, die direkt oder über ein Datennetzwerk mit einer anderen Steuerungsschnittstelleneinheit 310 einer anderen Datenschnittstellenvorrichtung 300 verbindbar ist, um von der Datenverarbeitungseinrichtung 300 erzeugte Datensätze an die andere Datenschnittstellenvorrichtung 300 zu übertragen.

Um derartige Daten bzw. Datensätze von anderen Datenschnittstellenvorrichtung 300 empfangen zu können, ist die Steuerungsschnittstelleneinheit 310 beispielhaft mit einer Datensatz-Empfangseinheit 311 ausgestattet, die direkt oder über ein Datennetzwerk mit einer anderen Kommunikationseinheit 340 einer anderen Datenschnittstellenvorrichtung 300 bzw. mit deren Datensatz-Ausgabeeinheit 342 verbindbar ist, um von einer anderen Datenverarbeitungseinrichtung 330 erzeugte Datensätze der anderen Datenschnittstellenvorrichtung 300 zu empfangen.

Dies ist besonders zweckmäßig, da so mittels der Kommunikationsverbindung der jeweiligen Datensatz-Ausgabeeinheiten 342 und Datensatz-Empfangseinheiten 311 mehrere Datenschnittstellenvorrichtung 300 seriell und zudem teilweise parallel zusammen geschaltet zu werden, um effizient Datensätze auszutauschen bzw. ggf. an einer zentral angeordneten Datenschnittstellenvorrichtung 300 Datensätze unterschiedlicher Datenschnittstellenvorrichtungen 300 zu empfangen und zu sammeln, bzw. dann über deren Kommunikationseinheit 340 anderen externen in Vorteilhaft einheitlicher, zentralisierter und zuverlässiger Weise Datensätze betreffend große, protokolltechnisch inhomogene und ggf. an mehreren Orten platzierte Werkzeugmaschinen flexibel mit mehreren von der Kommunikationseinheit 340 unterstützten M2M-Protokollen und ggf. auf Basis eines beispielhaften Publish/Subscribe-Modells zur Verfügung zu stellen.

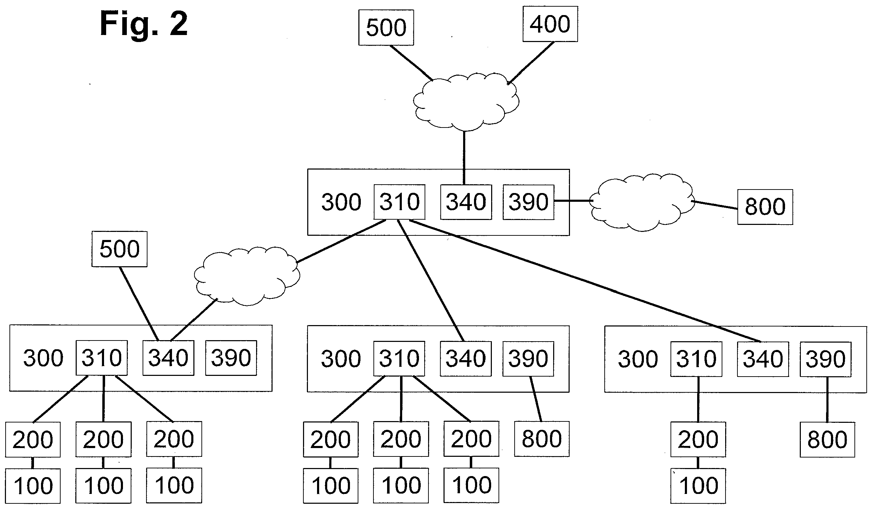

Fig. 2 zeigt eine beispielhafte schematische Darstellung eines Systems gemäß einem weiteren Ausführungsbeispiel der Erfindung.

Die in Fig. 2 beschriebenen Datenschnittstellenvorrichtungen 300 sind z.B. jeweils beispielhaft wie in Fig. 1 ausgeführt, wobei lediglich zur Vereinfachung in Fig. 2 nur die Kommunikationsschnittstellen gezeigt sind, d.h. die jeweilige Steuerungsschnittstelleneinheit 310 (die jeweils eine nicht gezeigte Datensatz-Empfangseinheit 311 aufweisen), die jeweilige Kommunikationseinheit 340 (die jeweils eine nicht gezeigte Datensatz-Ausgabeeinheit 342 aufweisen) und die optionale Datenschnittstelle 390, die beispielhaft direkt oder über ein Datennetzwerk (z.B. ein LAN, WAN, WLAN, Intranet oder das Internet) an eine jeweilige externe Datenspeichervorrichtung 800 angeschlossen bzw. mit dieser verbunden ist.

Wie bereits beschrieben, ermöglichen es die Kommunikationsverbindungen zwischen einer (oder mehreren) Datenschnittstelle(n) 390 und einer (oder mehreren) externen Datenspeichervorrichtungen 800, die in dem ersten Datenspeichermedium 370 der jeweiligen Datenschnittstellenvorrichtungen 300 gespeicherten Daten zur Datensicherung und/oder Langzeitspeicherung an die jeweilige extern verbundene Datenspeichervorrichtung 800 zu übertragen, insbesondere bevorzugt gemäß einer synchronen, asynchronen, in regelmäßigen Abständen durchgeführten oder bei Überschreiten eines Grenzwerts der in dem ersten Datenspeichermedium gespeicherten Datenmenge durchgeführten Datenübertragung bzw. Datenspiegelung.

Beispielhaft sind die Werkzeugmaschinen 100 mit ihren Steuervorrichtungen 200 jeweils mit einer Steuerungsschnittstelleneinheit 310 einer jeweiligen Datenschnittstellenvorrichtung 300 verbunden (analog Fig. 1), wobei beispielhaft teilweise mehrere Werkzeugmaschinen 100 mit ihren Steuervorrichtungen 200 an der gleichen Datenschnittstellenvorrichtung 300 verbunden sein können (siehe die beiden linken Datenschnittstellenvorrichtungen 300 in Fig. 2) oder auch beispielhaft nur eine Werkzeugmaschine 100 mit ihrer Steuervorrichtung 200 an einer einzigen Datenschnittstellenvorrichtung 300 verbunden sein kann (siehe die rechte Werkzeugmaschine 100 in Fig. 2).

Hierbei können die Steuerungsvorrichtungen 200 jeweils unterschiedliche Kommunikationsprotokolle der (ggf. jeweiligen) ersten Gruppe verwenden, die von den jeweiligen Steuerungsschnittstelleneinheiten 310 unterstützt werden. Somit können mit einer einfachen und zuverlässigen Architektur vorteilhaft Daten von unterschiedlichsten Werkzeugmaschinen 100 ggf. an unterschiedlichen Standorten mit ggf. unterschiedlichsten Steuerungen und deren verwendeten Kommunikationsprotokollen in einheitlicher Weise ausgelesen werden und deren Daten bzw. Sensorikdaten, Maschinendaten, Maschinenzustandsdaten und/oder auch diese Daten angebenden Datensätze können vorteilhaft zuverlässig, effizient, einheitlich und vielseitig in unterschiedlichsten Systemzusammenstellungen übertragen werden.

Beispielhaft ist die linke Datenschnittstellenvorrichtung 300 aus Fig. 2 analog zu Fig. 1 mit der entsprechenden Kommunikationseinheit 340 direkt an eine externe Computereinrichtung 500 angebunden, um mittels einer von dieser Computereinrichtung 500 verwendetem M2M- oder Internet-Kommunikationsprotokoll der zweiten Gruppe von Kommunikationsprotokollen Daten an diese zu übertragen.

Zudem sind die Kommunikationseinheiten 340 der drei unteren Datenschnittstellenvorrichtungen 300 über deren (nicht gezeigte) Datensatz-Ausgabeeinheiten 342 mit der Steuerungsschnittstelleneinheit 310 der oberen Datenschnittstellenvorrichtung 300 in Fig. 2 verbunden, bzw. beispielhaft genauer mit deren Datensatz-Empfangseinheit 311. Diese Kommunikationsverbindungen können direkt oder auch über ein Datennetzwerk (lokal oder global) aufgebaut sein.

Dies hat den Vorteil, dass die obere Datenschnittstellenvorrichtung 300 in Fig. 2 Datensätze der unterschiedlichen "untergeordneten" Datenschnittstellenvorrichtungen 300 (z.B. an unterschiedlichsten Standorten) effizient in einem einzigen gemeinsamen Kommunikationsprotokoll und ggf. auf Basis optimierter und aufeinander eingestellter jeweiliger Konfigurationsdaten empfangen und sammeln kann, sowie diese z.B. über die entsprechende Datenschnittstelle 390 und beispielhaft über ein Datennetzwerk an eine externe Datenspeichervorrichtung 800 zu übertragen, bzw. diese gesammelten Datensätze betreffend die Vielzahl von Werkzeugmaschinen 100 effizient, vereinheitlicht, zuverlässig, und flexibel in Bezug auf die unterstützten M2M-Kommunikationsprotokolle sowie auf einfache Weise an weitere externe Datenverarbeitungsvorrichtungen, wie z.B. Computereinrichtungen 500 und Servereinrichtungen 400 (z.B. Datenserver, Webserver, Message-Broker-Server etc.) zu übertragen.

Der Server 400 kann z.B. von mehreren Werkzeugmaschinen 100 gesammelte Sensorikdaten 381 lokal zentralisiert speichern und für Analysen zur Verfügung stellen. Über Netzwerk (z.B. ein LAN, WAN, WLAN, Intranet oder das Internet, oder alternativ über das gleiche Netzwerk 600) können die Daten an einen Zentralserver übertragen werden und dort global zentralisiert gespeichert werden. Zusätzlich oder alternativ kann die Datenschnittstelle 390 der übergeordneten Datenschnittstelleneinheit 300 alle Daten zentralisiert an der externen Datenspeichervorrichtung 800 speichern.

Der Server 400 kann somit alle Sensorikdaten und Datensätze aller Werkzeugmaschinen speichern, und zur Anzeige bzw. Analyse, oder auch zum Vergleich bereitzustellen, um diese anzuzeigen, zu analysieren oder etwaige Wartungs- bzw. Ersatzteilbedarfsvorhersagen zu generieren. Die Werkzeugmaschinen 100 können hierbei sogar in unterschiedlichen Werkshallen oder an unterschiedlichen Standorten bzw. bei unterschiedlichen Firmen aufgestellt sein.

In weiteren Ausführungsbeispielen kann die Datenverarbeitungseinrichtung 330 der Datenschnittstellenvorrichtung weiterhin dazu eingerichtet sein, Daten bzw. Datensätze in komprimierter Form (d.h. nach Datenkompression) in der Datenspeichereinrichtung zu speichern und/oder Datensätze in komprimierter Form (d.h. nach Datenkompression) als Nutzdaten bzw. Payload-Daten an die Kommunikationseinheit 340 ausgeben.

Zusammenfassend wird eine Datenübertragungslösung zwischen Werkzeugmaschinen und externen Datenverarbeitungsvorrichtungen (z.B. Servern oder Servernetzwerken) bereitgestellt, die auf einfache, effiziente und zuverlässige Weise den Datenaustausch und die einheitliche Maschinenzustandsüberwachung ermöglicht, insbesondere in einem System mit einer Vielzahl von unterschiedlichen Werkzeugmaschinen - teils unterschiedlicher Baureihen und mit unterschiedlichem Baujahr sowie mit teils sehr unterschiedlichen Steuerungen unterschiedlicher Hersteller und unterschiedlichen Steuerungsversionen - und mit externen Datenverarbeitungsvorrichtungen zur Zustandsüberwachung der Werkzeugmaschinen.

Hierbei wird eine äußerst vielseitige Protokollübersetzungsfunktion (d.h. insbesondere Steuerungsprotokoll übersetzt nach M2M-Protokoll, wie z.B. OPC UA, MQTT, MTConnect oder AMQP) bereitgestellt und gleichzeitig eine flexibel und effizient arbeitende, mit Konfigurationsdaten individuell an unterschiedlichste Werkzeugmaschinen anpassbare Datenverarbeitungs- und Datenübertragungslösung vorgeschlagen.

Insbesondere kann eine vereinheitlichte, einfachere, übersichtlichere Datenübertragungs- bzw. Datenschnittstellenlösung zur Überwachung von Maschinenzuständen unterschiedlicher Werkzeugmaschinen mit unterschiedlichen Steuerungen bereitgestellt werden, die zudem vorteilhaft unabhängig von Werkzeugmaschinentyp und/oder Steuerungstyp universell einsetzbar sein kann.

## Patentansprüche

1. Datenschnittstellenvorrichtung zur Datenübertragung zwischen einer numerisch gesteuerten Werkzeugmaschine (100), die eine Steuereinrichtung (200) zum Steuern einer Mehrzahl von Aktoren (110) der Werkzeugmaschine (100) umfasst, und einer externen Datenverarbeitungsvorrichtung (400; 500),
wobei die Datenschnittstellenvorrichtung (300) umfasst:
- eine Steuerungsschnittstelleneinheit (310) zur Datenübertragung mit der Steuereinrichtung (200) der Werkzeugmaschine (100),
- eine Kommunikationseinheit (340) zur Datenübertragung mit der externen Datenverarbeitungsvorrichtung (400; 500),
**dadurch gekennzeichnet, dass** die Datenschnittstellenvorrichtung umfasst:
- eine Datenverarbeitungseinrichtung (330) zur Datenverarbeitung von zumindest über die Steuerungsschnittstelleneinheit (310) empfangenen Daten,
- eine Datenspeichereinrichtung (350) mit einem ersten Speichermedium (370) zum Speichern von über die Steuerungsschnittstelleneinheit (310) empfangenen Daten und/oder von der Datenverarbeitungseinrichtung (330) verarbeiteten Daten und einem zweiten Speichermedium (360) zum Speichern von Konfigurationsdaten (361), und
wobei die Konfigurationsdaten (361) ein von der Steuereinrichtung (200) der Werkzeugmaschine (100) verwendetes Kommunikationsprotokoll aus einer ersten Gruppe von Kommunikationsprotokollen und ein von der von der externen Datenverarbeitungsvorrichtung (400; 500) verwendetes Kommunikationsprotokoll aus einer zweiten Gruppe von Kommunikationsprotokollen angeben,
wobei die Steuerungsschnittstelleneinheit (310) dazu eingerichtet ist, zur Datenübertragungjedes der Kommunikationsprotokolle aus der ersten Gruppe von Kommunikationsprotokollen zu verwenden und für die Datenübertragung mit der Steuereinrichtung (200) der Werkzeugmaschine (100) auf Grundlage der Konfigurationsdaten (361) das von der Steuereinrichtung (200) der Werkzeugmaschine (100) verwendete Kommunikationsprotokoll auszuwählen, und
wobei die Kommunikationseinheit (340) dazu eingerichtet ist, zur Datenübertragungjedes der Kommunikationsprotokolle aus der zweiten Gruppe von Kommunikationsprotokollen zu verwenden und für die Datenübertragung mit der externen Datenverarbeitungsvorrichtung (400; 500) auf Grundlage der Konfigurationsdaten das von der externen Datenverarbeitungsvorrichtung (400; 500) verwendete Kommunikationsprotokoll auszuwählen.

2. Datenschnittstellenvorrichtung gemäß Anspruch 1, **dadurch gekennzeichnet, dass**
die Steuerungsschnittstelleneinheit (310) dazu eingerichtet ist, parallel mit mehreren verbundenen Steuereinrichtungen (200) jeweiliger Werkzeugmaschinen (100) Daten zu übertragen, und
die Konfigurationsdaten (361) für jede der verbundenen Steuereinrichtungen (200) das von der jeweiligen Steuereinrichtung (200) verwendete Kommunikationsprotokoll aus der ersten Gruppe von Kommunikationsprotokollen angeben,
wobei die Steuerungsschnittstelleneinheit (310) dazu eingerichtet ist, für die Datenübertragung mit einer der verbundenen Steuereinrichtungen (200) auf Grundlage der Konfigurationsdaten (361) das von der einen Steuereinrichtung (200) verwendete Kommunikationsprotokoll auszuwählen und für die Datenübertragung mit einer anderen der verbundenen Steuereinrichtungen (200) auf Grundlage der Konfigurationsdaten das von der anderen Steuereinrichtung (200) verwendete Kommunikationsprotokoll auszuwählen.

3. Datenschnittstellenvorrichtung gemäß Anspruch 1 oder 2, **dadurch gekennzeichnet, dass**
die Kommunikationseinheit (340) dazu eingerichtet ist, parallel mit mehreren verbundenen externen Datenverarbeitungsvorrichtungen (400, 500) Daten zu übertragen, und
die Konfigurationsdaten (361) für jede der verbundenen externen Datenverarbeitungsvorrichtungen (400, 500) das von der jeweiligen externen Datenverarbeitungsvorrichtung verwendete Kommunikationsprotokoll aus der zweiten Gruppe von Kommunikationsprotokollen angeben,
wobei die Kommunikationseinheit (340) dazu eingerichtet ist, für die Datenübertragung mit einer der verbundenen externen Datenverarbeitungsvorrichtungen auf Grundlage der Konfigurationsdaten (361) das von der einen verbundenen externen Datenverarbeitungsvorrichtung verwendete Kommunikationsprotokoll auszuwählen und für die Datenübertragung mit einer anderen der verbundenen externen Datenverarbeitungsvorrichtungen auf Grundlage der Konfigurationsdaten (361) das von der anderen verbundenen externen Datenverarbeitungsvorrichtung verwendete Kommunikationsprotokoll auszuwählen.

4. Datenschnittstellenvorrichtung gemäß einem der vorstehenden Ansprüche, **dadurch gekennzeichnet, dass**
die Konfigurationsdaten (361) für eine oder mehrere Werkzeugmaschinen, die jeweils eine Mehrzahl von Sensoren (120) zur Ausgabe von einen Maschinenzustand der jeweiligen Werkzeugmaschine (100) betreffenden Sensorsignalen an die Steuereinrichtung (200) der jeweiligen Werkzeugmaschine (100) umfassen, eine jeweilige Gruppe von Sensoren der jeweiligen Werkzeugmaschine und/oder Auslese- und Verarbeitungsregeln für Sensorsignale der Gruppe von Sensoren der jeweiligen Werkzeugmaschine (100) angeben;
wobei die Datenschnittstellenvorrichtung (300) eine Ausleseeinheit (320) zum Auslesen von Sensorsignalwerten der Sensorsignale der in den Konfigurationsdaten (361) angegebenen Gruppe von Sensoren der Werkzeugmaschine (100) über die Steuerungsschnittstelleneinheit (310) auf Grundlage der der in den Konfigurationsdaten (361) angegebenen Ausleseregeln umfasst; und/oder
wobei die Datenverarbeitungseinrichtung (330) dazu eingerichtet ist, die mittels der Ausleseeinheit (320) ausgelesenen Sensorsignalwerte auf Grundlage der in den Konfigurationsdaten (361) angegebenen Verarbeitungsregeln zu aggregierten Sensorikdaten zu verarbeiten.

5. Datenschnittstellenvorrichtung gemäß einem der vorstehenden Ansprüche, **dadurch gekennzeichnet, dass**
die Datenverarbeitungseinrichtung (330) dazu eingerichtet ist, Datensätze eines vorbestimmten, von den Kommunikationsprotokollen der ersten und zweiten Gruppen unabhängigen Datenformats zu erzeugen, insbesondere auf Grundlage der von über die Steuerungsschnittstelleneinheit (310) empfangenen Daten, auf Grundlage der von der Datenverarbeitungseinrichtung (330) verarbeiteten Daten und/oder auf Grundlage der von der Datenspeichereinrichtung (350) gespeicherten Daten.

6. Datenschnittstellenvorrichtung gemäß Anspruch 5, **dadurch gekennzeichnet, dass**
jeder erzeugte Datensatz Identifikationsdaten umfasst, die betreffend den erzeugten Datensatz zugrundeliegenden Daten eine Identität einer oder mehrerer Werkzeugmaschinen, eine Identität einer oder mehrerer Werkzeugmaschinenbauteile und/oder eine Identität eines oder mehrerer Sensoren angeben; und/oder
jeder erzeugte Datensatz Wertdaten und einen oder mehrere mit den Wertdaten assoziierte Zeitstempel angeben, wobei die Wertdaten Datenwerte angeben, die einen oder mehrere Sensorsignal- und/oder Steuersignalwerte, einen oder mehrere aus mehreren Signalwerten berechnete Datenwerte und/oder einen oder mehrere einen Maschinenzustand einer oder mehrerer Werkzeugmaschinen angebende Zustandswerte, und wobei für jeden Datensatz und/oder für jeden Wert der Wertdaten ein Datentyp angegeben ist, wobei der Datentyp angibt, ob der entsprechende Wert einen Maschinenstatus, einen Signalwert oder ein Betriebsereignis bei dem Betrieb einer entsprechenden Werkzeugmaschine beschreibt.

7. Datenschnittstellenvorrichtung Anspruch 5 oder 6, **dadurch gekennzeichnet, dass**
die Datenverarbeitungseinrichtung (330) auf Basis von in dem zweiten Speichermedium (360) gespeicherten Signaturdaten dazu eingerichtet ist, einem erzeugten Datensatz eine elektronische Signatur anzufügen und/oder an Datensätzen angefügte Signaturen zu überprüfen;
die Datenverarbeitungseinrichtung (330) auf Basis von in dem zweiten Speichermedium (360) gespeicherten Verschlüsselungsdaten dazu eingerichtet ist, einen erzeugten Datensatz zu verschlüsseln und/oder verschlüsselte Datensätze auf Basis von in dem zweiten Speichermedium (360) gespeicherten Verschlüsselungsdaten zu entschlüsseln; und/oder
die Datenverarbeitungseinrichtung (330) weiterhin dazu eingerichtet ist, einem erzeugten Datensatz eine Identifikationssignatur anzufügen.

8. Datenschnittstellenvorrichtung gemäß einem der Ansprüche 5 bis 7, **dadurch gekennzeichnet, dass**
die Kommunikationseinheit (340) dazu eingerichtet ist, für die Datenübertragung mit der externen Datenverarbeitungsvorrichtung (400; 500) ein Datenpaket mit Header-Daten und Nutzdaten zu erzeugen,
wobei die Header-Daten auf Grundlage des von der externen Datenverarbeitungsvorrichtung (400; 500) verwendeten Kommunikationsprotokolls erzeugt werden und die Nutzdaten einen oder mehrere von der Datenverarbeitungseinrichtung (330) erzeugte Datensätze des von den Kommunikationsprotokollen der ersten und zweiten Gruppen unabhängigen Datenformats umfassen.

9. Datenschnittstellenvorrichtung gemäß einem der Ansprüche 5 bis 8, **dadurch gekennzeichnet, dass**
die Steuerungsschnittstelleneinheit (310) dazu eingerichtet ist, für die Datenübertragung mit der Steuereinrichtung (200) ein Datenpaket mit Header-Daten zu erzeugen,
wobei die Header-Daten auf Grundlage des von der Steuereinrichtung (200) verwendeten Kommunikationsprotokolls erzeugt werden.

10. Datenschnittstellenvorrichtung gemäß einem der Ansprüche 5 bis 9, **dadurch gekennzeichnet, dass**
die Datenverarbeitungseinrichtung (330) einen oder mehrere Datensätze in regelmäßigen Zeitintervallen, die insbesondere in den Konfigurationsdaten (361) angegeben sind, auf Basis von in den Konfigurationsdaten (361) angegebenen Verarbeitungsregeln zu erzeugen und an die Kommunikationseinheit (340) zu senden, insbesondere mit einer Instruktion, die den einen oder die mehreren Datensätze in einem oder mehreren Datenpaketen gemäß einem oder mehreren Kommunikationsprotokollen der zweiten Gruppe zu übertragen;
wobei die Kommunikationseinheit (340) dazu eingerichtet ist, die einen oder die mehreren Datensätze in einem oder mehreren Datenpaketen gemäß einem oder mehreren Kommunikationsprotokollen der zweiten Gruppe an mehrere verbundene externe Datenverarbeitungsvorrichtungen (400, 500) gemäß eines Publish-Subscriber-Modells zu übertragen, wobei die Konfigurationsdaten (361) insbesondere Subscriberidentifikationsdaten umfassen, die einen oder mehrere der verbundenen externe Datenverarbeitungsvorrichtungen als eingeschriebene Subscriber angeben.

11. Datenschnittstellenvorrichtung gemäß einem der vorstehenden Ansprüche, **dadurch gekennzeichnet, dass**
die Kommunikationseinheit (340) eine Datensatz-Ausgabeeinheit (342) aufweist, die direkt oder über ein Datennetzwerk mit einer Steuerungsschnittstelleneinheit (310) einer anderen Datenschnittstellenvorrichtung (300) gemäß einem der vorstehenden Ansprüche verbindbar ist, um von der Datenverarbeitungseinrichtung (300) erzeugte Datensätze an die andere Datenschnittstellenvorrichtung (300) zu übertragen.

12. Datenschnittstellenvorrichtung gemäß einem der vorstehenden Ansprüche, **dadurch gekennzeichnet, dass**
die Steuerungsschnittstelleneinheit (310) eine Datensatz-Empfangseinheit (311) aufweist, die direkt oder über ein Datennetzwerk mit einer Kommunikationseinheit (340) einer anderen Datenschnittstellenvorrichtung (300) gemäß einem der vorstehenden Ansprüche verbindbar ist, um von einer Datenverarbeitungseinrichtung (330) erzeugte Datensätze der anderen Datenschnittstellenvorrichtung (300) zu empfangen.

13. Datenschnittstellenvorrichtung gemäß einem der vorstehenden Ansprüche, **dadurch gekennzeichnet, dass**
die Kommunikationseinheit (340) dazu eingerichtet ist, von einer externen Datenverarbeitungsvorrichtung Konfigurationsinstruktionen zu empfangen,
wobei die Datenverarbeitungseinrichtung (330) dazu eingerichtet ist, auf Grundlage der über die Kommunikationseinheit (340) empfangenen Konfigurationsinstruktionen die in der Datenspeichereinrichtung (350) gespeicherten Konfigurationsdaten zu modifizieren und/oder neue Konfigurationsdaten zu speichern.

14. Datenschnittstellenvorrichtung gemäß einem der vorstehenden Ansprüche, **dadurch gekennzeichnet, dass**
die Datenspeichereinrichtung (350) eine Datenschnittstelle (390) aufweist, die dazu eingerichtet ist, die in dem ersten Datenspeichermedium (370) gespeicherten Daten zur Datensicherung und/oder Langzeitspeicherung an eine extern verbundene Datenspeichervorrichtung (800) zu übertragen, insbesondere gemäß einer synchronen, asynchronen, in regelmäßigen Abständen durchgeführten oder bei Überschreiten eines Grenzwerts der in dem ersten Datenspeichermedium gespeicherten Datenmenge durchgeführten Datenübertragung bzw. Datenspiegelung; und/oder
die externe Datenspeichervorrichtung über ein lokales oder globales Netzwerk verbunden ist und einen externen Datenserver, einen Webserver, eine externen Message-Broker-Einheit und/oder eine andere Datenschnittstellenvorrichtung gemäß einem der vorstehenden Ansprüche umfasst bzw. ein externer Datenserver, ein Webserver, eine externe Message-Broker-Einheit und/oder eine andere Datenschnittstellenvorrichtung (300) gemäß einem der vorstehenden Ansprüche ist.

15. System mit einer oder mehrerer Datenschnittstellenvorrichtungen (300) gemäß einem der vorstehenden Ansprüche und einer oder mehrerer externer Datenverarbeitungseinrichtungen (400, 500), die über ein lokales oder globales Datennetzwerk (600) mit einer Kommunikationseinheit (340) zumindest einer der Datenschnittstellenvorrichtungen (300) verbunden sind, wobei insbesondere eine Kommunikationseinheit (340) zumindest einer der Datenschnittstellenvorrichtungen (300) über ein lokales oder globales Datennetzwerk (600) mit einer Steuerungsschnittstelleneinheit (310) einer anderen Datenschnittstellenvorrichtung verbunden ist.

## Claims

1. A data interface device for data transmission between a numerically controlled machine tool (100) comprising a control device (200) for controlling a plurality of actuators (110) of said machine tool (100) and an external data processing device (400; 500),
said data interface device (300) comprising:
- a control interface unit (310) for data transmission with said control device (200) of said machine tool (100),
- a communication unit (340) for data transmission with said external data processing device (400; 500),
**characterized in that** said data interface device comprises:
- a data processing device (330) for processing of data received at least via said control interface unit (310),
- a data storage device (350) having a first storage medium (370) for storing data received via said control interface unit (310) and/or data processed by said data processing device (330), and a second storage medium (360) for storing configuration data (361),
wherein the configuration data (361) indicate a communication protocol used by said control device (200) of said machine tool (100) from a first group of communication protocols, and a communication protocol used by said external data processing device (400; 500) from a second group of communication protocols,
wherein said control interface unit (310) is configured to use each of the communication protocols from the first group of communication protocols for data transmission and to select the communication protocol used by said control device (200) of said machine tool (100) for data transmission with the control device (200) of said machine tool (100) based on the configuration data (361), and
wherein said communication unit (340) is configured to use each of the communication protocols from the second group of communication protocols for data transmission and to select the communication protocol used by said external data processing device (400; 500) for data transmission with said external data processing device (400; 500) based on the configuration data.

2. The data interface device according to claim 1, **characterized in that**
said control interface unit (310) is configured to transmit data in parallel with a plurality of connected control devices (200) of respective machine tools (100), and
said configuration data (361) for each of the connected control devices (200) indicate the communication protocol from the first group of communication protocols used by the respective control device (200),
wherein said control interface unit (310) is configured to select, for data transmission with one of the connected control devices (200), the communication protocol used by the one control device (200) based on the configuration data (361) and to select, for data transmission with another of the connected control devices (200), the communication protocol used by the other control device (200) based on the configuration data.

3. The data interface device according to claim 1 or 2, **characterized in that**
said communication unit (340) is configured to transmit data in parallel with a plurality of connected external data processing devices (400, 500), and
the configuration data (361) indicates, for each of the connected external data processing devices (400, 500), the communication protocol used by the respective external data processing device from the second group of communication protocols,
wherein said communication unit (340) is configured to select, for data transmission with one of the connected external data processing devices, the communication protocol used by the one connected external data processing device based on the configuration data (361) and to select, for data transmission with another of the connected external data processing devices, the communication protocol used by the other connected external data processing device based on the configuration data (361).

4. The data interface device according to one of the preceding claims, **characterized in that**
the configuration data (361) for one or more machine tools, each comprising a plurality of sensors (120) for outputting sensor signals relating to a machine status of the respective machine tool (100) to said control device (200) of the respective machine tool (100), indicate a respective group of sensors of the respective machine tool and/or readout and processing rules for sensor signals of the group of sensors of the respective machine tool (100);
wherein said data interface device (300) comprises a readout unit (320) for reading out sensor signal values of the sensor signals of the group of sensors of said machine tool (100) indicated in the configuration data (361) via said control interface unit (310) based on the readout rules indicated in the configuration data (361); and/or
wherein said data processing device (330) is configured to process the sensor signal values read out by means of said readout unit (320) into aggregated sensor data on the basis of the processing rules indicated in the configuration data (361).

5. The data interface device according to one of the preceding claims, **characterized in that**
said data processing device (330) is configured to generate data sets of a predetermined data format independent of the communication protocols of the first and second groups, in particular based on the data received via said control interface unit (310) received data, based on the data processed by said data processing device (330) and/or based on the data stored by the data storage device (350).

6. The data interface device according to claim 5, **characterized in that**
each generated data set comprises identification data which, with regard to the generated data set, indicates an identity of one or more machine tools, an identity of one or more machine tool components and/or an identity of one or more sensors; and/or
each generated data set indicates value data and one or more time stamps associated with the value data, wherein the value data indicate data values which indicate one or more sensor signal and/or control signal values, one or more data values calculated from a plurality of signal values and/or one or more state values indicating a machine status of one or more machine tools and wherein a data type is specified for each data set and/or for each value of the value data, wherein the data type indicates whether the corresponding value describes a machine status, a signal value or an operating event in the operation of a corresponding machine tool.

7. The data interface device according to claim 5 or 6, **characterized in that**
said data processing device (330), on the basis of signature data stored in said second storage medium (360), is configured to add an electronic signature to a generated data set and/or to verify signatures added to data sets;
said data processing device (330) is configured to encrypt a generated data set on the basis of encryption data stored in said second storage medium (360) and/or to decrypt data sets on the basis of decryption data stored in said second storage medium (360); and/or
said data processing device (330) is further configured to add an identification signature to a generated data set.

8. The data interface device according to one of claims 5 to 7, **characterized in that**
said communication unit (340) is configured to generate a data packet with including data and payload data for data transmission with said external data processing device (400; 500),
wherein the header data is generated based on the communication protocol used by said external data processing device (400; 500) and the payload data comprises one or more data sets generated by said data processing device (330) in the data format independent of the communication protocols of the first and second groups.

9. The data interface device according to one of claims 5 to 8, **characterized in that**
said control interface unit (310) is configured to generate a data packet containing header data for the data transmission with said control device (200),
wherein the header data is generated based on the communication protocol used by said control device (200).

10. The data interface device according to one of claims 5 to 9, **characterized in that**
said data processing device (330) generates one or more data sets at regular time intervals on the basis of processing rules specified in the configuration data (361), and sends them to said communication unit (340), in particular with an instruction to transmit the one or more data sets in one or more data packets in accordance with one or more communication protocols of the second group;
wherein said communication unit (340) is configured to transmit the one or more data sets in one or more data packets in accordance with one or more communication protocols of the second group to a plurality of connected external data processing devices (400, 500) according to a publish subscriber model, wherein the configuration data (361) in particular comprise subscriber identification data indicating one or more of the connected external data processing devices as registered subscribers

11. The data interface device according to one of the preceding claims, **characterized in that**
said communication unit (340) comprises a data set output unit (342) connectable directly or via a data network with a control interface unit (310) of another data interface device (300) according to one of the preceding claims for transmitting data sets generated by said data processing device (300) to the other data interface device (300).

12. The data interface device according to one of the preceding claims, **characterized in that**
said control interface unit (310) comprises a data set receiving unit (311) connectable directly or via a data network to a communication unit (340) of another data interface device (300) according to one of the preceding claims for receiving data sets generated by a data processing device (330) from the other data interface device (300).

13. The data interface device according to one of the preceding claims, **characterized in that**
said communication unit (340) is configured to receive configuration instructions from an external data processing device,
wherein said data processing device (330) is configured to modify the configuration data stored in said data storage device (350) and/or to store new configuration data based on the configuration instructions received via said communication unit (340).

14. The data interface device according to one of the preceding claims, **characterized in that**
said data storage device (350) comprises a data interface (390) configured to transmit the data stored in said first data storage medium (370) to an externally connected storage device (800) for data backup and/or long-term storage, in particular in accordance with a data transmission or data mirroring which is synchronous, asynchronous, carried out at regular intervals, or carried out when a limit value of the amount of data stored in the first data storage medium is exceeded; and/or
the external data storage device is connected via a local or global network and comprises an external data server, a web server, an external message broker unit and/or another data interface device according to one of the preceding claims or is an external data server, a web server, an external message broker unit and/or another data interface device and/or another data interface device (300) according to one of the preceding claims.

15. A system comprising one or more data interface devices (300) according to one of the preceding claims and one or more external data processing devices (400, 500) connected to a communication unit (340) of at least one of the data interface devices (300) via a local or global data network (600), wherein in particular a communication unit (340) of at least one of the data interface devices (300) is connected to a control interface unit (310) of another data interface device via a local or global data network (600).

## Revendications

1. Dispositif d'interface de données pour la transmission de données entre une machine-outil (100) à commande numérique, qui comprend un système de commande (200) pour la commande d'une pluralité d'actionneurs (110) de la machine-outil (100), et un dispositif de traitement de données externe (400 ; 500),
dans lequel le dispositif d'interface de données (300) comporte :
- une unité d'interface de commande (310) pour la transmission de données avec le système de commande (200) de la machine-outil (100),
- une unité de communication (340) pour la transmission de données avec le dispositif de traitement de données externe (400 ; 500),
**caractérisé en ce que** le dispositif d'interface de données comprend :
- un système de traitement de données (330) pour le traitement de données d'au moins des données reçues par l'intermédiaire de l'unité d'interface de commande (310),
- un système de mise en mémoire de données (350) avec un premier support de mémoire (370) pour la mise en mémoire de données reçues par l'intermédiaire de l'unité d'interface de commande (310) et/ou de données traitées par le système de traitement de données (330) et un deuxième support de mémoire (360) pour la mise en mémoire de données de configuration (361), et
dans lequel les données de configuration (361) indiquent un protocole de communication provenant d'un premier groupe de protocoles de communication utilisé par le système de commande (200) de la machine-outil (100) et un protocole de communication provenant d'un deuxième groupe de protocoles de communication utilisé par le dispositif de traitement de données externe (400 ; 500),
dans lequel l'unité d'interface de commande (310) est conçue, pour la transmission de données, pour utiliser chacun des protocoles de communication provenant du premier groupe de protocoles de communication et, pour la transmission de données avec le système de commande (200) de la machine-outil (100), pour sélectionner le protocole de communication utilisé par le système de commande (200) de la machine-outil (100) sur la base de données de configuration (361), et
dans lequel l'unité de communication (340) est conçue, pour la transmission de données, pour utiliser chacun des protocoles de communication provenant du deuxième groupe de protocoles de communication et, pour la transmission de données avec le dispositif de traitement de données externe (400 ; 500), pour sélectionner le protocole de communication utilisé par le dispositif de traitement de données externe (400 ; 500) sur la base des données de configuration.

2. Dispositif d'interface de données selon la revendication 1, **caractérisé en ce que**
l'unité d'interface de commande (310) est conçue pour transmettre des données à des machines-outils (100) respectives parallèlement avec plusieurs systèmes de commande (200) reliés, et
les données de configuration (361) pour chacun des systèmes de commande (200) reliés indiquent le protocole de communication provenant du premier groupe de protocoles de communication utilisé par le système de commande (200) respectif,
dans lequel l'unité d'interface de commande (310) est conçue, pour la transmission de données avec un des systèmes de commande (200) reliés, pour sélectionner le protocole de communication utilisé par l'un des systèmes de commande (200) sur la base des données de configuration (361) et, pour la transmission de données avec un autre des systèmes de commande (200) reliés, pour sélectionner le protocole de communication utilisé par l'autre système de commande (200) sur la base des données de configuration.

3. Dispositif d'interface de données selon la revendication 1 ou 2, **caractérisé en ce que**
l'unité de communication (340) est conçue pour transmettre des données parallèlement avec plusieurs dispositifs de traitement de données externes (400, 500) reliés, et
les données de configuration (361) pour chacun des dispositifs de traitement de données externes (400, 500) reliés indiquent le protocole de communication provenant du deuxième groupe de protocoles de communication utilisé par le dispositif de traitement de données externe respectif,
dans lequel l'unité de communication (340) est conçue, pour la transmission de données avec un des dispositifs de traitement de données externes reliés, pour sélectionner le protocole de communication utilisé par l'un des dispositifs de traitement de données externes relié sur la base des données de configuration (361) et, pour la transmission de données avec un autre des dispositifs de traitement de données externes reliés, pour sélectionner le protocole de communication utilisé par l'autre dispositif de traitement de données externe relié sur la base des données de configuration (361).

4. Dispositif d'interface de données selon l'une quelconque des revendications précédentes, **caractérisé en ce que**
les données de configuration (361) pour une ou plusieurs machines-outils, qui comprennent respectivement une pluralité de capteurs (120) pour la délivrance de signaux de capteur concernant un état de machine de la machine-outil (100) respective au système de commande (200) de la machine-outil (100) respective, indiquent un groupe respectif de capteurs de la machine-outil respective et/ou de règles de lecture et traitement pour des signaux de capteur du groupe de capteurs de la machine-outil (100) respective ;
dans lequel le dispositif d'interface de données (300) comprend une unité de lecture (320) pour la lecture de valeurs de signaux de capteur des signaux de capteur du groupe de capteurs de la machine-outil (100) indiqué dans les données de configuration (361) par l'intermédiaire de l'unité d'interface de commande (310) sur la base des règles de lecture indiquées dans les données de configuration (361) ; et/ou
dans lequel le système de traitement de données (330) est conçu pour traiter les valeurs de signaux de capteur lues au moyen de l'unité de lecture (320) sur la base des règles de traitement indiquées dans les données de configuration (361) en données de détection agrégées.

5. Dispositif d'interface de données selon l'une quelconque des revendications précédentes, **caractérisé en ce que**
le système de traitement de données (330) est conçu pour générer des ensembles de données d'un format de données prédéfini, indépendant des protocoles de communication des premier et deuxième groupes, en particulier sur la base des données reçues par l'intermédiaire de l'unité d'interface de commande (310), sur la base des données traitées par le système de traitement de données (330) et/ou sur la base des données mises en mémoire par le système de mise en mémoire de données (350).

6. Dispositif d'interface de données selon la revendication 5, **caractérisé en ce que**
chaque ensemble de données généré comprend des données d'identification, les données servant de base concernant l'ensemble de données généré indiquent une identité d'une ou plusieurs machines-outils, une identité d'une ou plusieurs pièces de machine-outil et/ou une identité d'un ou plusieurs capteurs ; et/ou
chaque ensemble de données généré indique des données de valeurs et une ou plusieurs estampilles temporelles associées aux données de valeurs, dans lequel les données de valeurs indiquent des valeurs de données qui ont une ou plusieurs valeurs de signal de capteur et/ou de signal de commande, une ou plusieurs valeurs de données calculées à partir de plusieurs valeurs de signal et/ou une ou plusieurs valeurs d'état indiquant un état de machine d'une ou plusieurs machines-outils, et dans lequel pour chaque ensemble de données et/ou pour chaque valeur des données de valeurs un type de données est indiqué, dans lequel le type de données indique si la valeur correspondante décrit un statut de machine, une valeur de signal ou un événement de fonctionnement lors du fonctionnement d'une machine-outil correspondante.

7. Dispositif d'interface de données selon la revendication 5 ou 6, **caractérisé en ce que**
le système de traitement de données (330) est conçu pour ajouter à un ensemble de données généré une signature électronique et/ou pour contrôler des signatures ajoutées aux ensembles de données sur la base de données de signature mises en mémoire dans le deuxième support de mémoire (360) ;
le système de traitement de données (330) est conçu pour chiffrer un ensemble de données généré et/ou pour déchiffrer des ensembles de données chiffrés sur la base de données de chiffrement mises en mémoire dans le deuxième support de mémoire (360) sur la base de données de chiffrement mises en mémoire dans le deuxième support de mémoire (360) ; et/ou
le système de traitement de données (330) est conçu en outre pour ajouter une signature d'identification à un ensemble de données généré.

8. Dispositif d'interface de données selon l'une quelconque des revendications 5 à 7, **caractérisé en ce que**
l'unité de communication (340) est conçue, pour la transmission de données avec le dispositif de traitement de données externe (400 ; 500), pour générer un paquet de données avec des données d'en-tête et des données utiles,
dans lequel les données d'en-tête sont générées sur la base du protocole de communication utilisé par le dispositif de traitement de données externe (400 ; 500) et les données utiles comprennent un ou plusieurs ensembles de données du format de données indépendant des protocoles de communication des premier et deuxième groupes générés par le système de traitement de données (330).

9. Dispositif d'interface de données selon l'une quelconque des revendications 5 à 8, **caractérisé en ce que**
l'unité d'interface de commande (310) est conçue, pour la transmission de données avec le système de commande (200), pour générer un paquet de données avec des données d'en-tête,
dans lequel les données d'en-tête sont générées sur la base du protocole de communication utilisé par le système de commande (200).

10. Dispositif d'interface de données selon l'une quelconque des revendications 5 à 9, **caractérisé en ce que**
le système de traitement de données (330) est conçu pour générer un ou plusieurs ensembles de données par intervalles de temps réguliers, qui sont indiqués en particulier dans les données de configuration (361), sur la base de règles de traitement indiquées dans les données de configuration (361) et pour les envoyer à l'unité de communication (340), en particulier avec une instruction, qui est conçue pour transmettre l'un des ou les différents ensembles de données en un ou plusieurs paquets de données selon un ou plusieurs protocoles de communication du deuxième groupe ;
dans lequel l'unité de communication (340) est conçue pour transmettre l'un des ou les différents ensembles de données en un ou plusieurs paquets de données selon un ou plusieurs protocoles de communication du deuxième groupe à plusieurs dispositifs de traitement de données externes (400, 500) reliés selon un modèle de publication-abonné, dans lequel les données de configuration (361) comprennent en particulier des données d'identification d'abonné, qui indiquent un ou plusieurs des dispositifs de traitement de données externes reliés comme abonnés inscrits.

11. Dispositif d'interface de données selon l'une quelconque des revendications précédentes, **caractérisé en ce que**
l'unité de commutation (340) présente une unité de délivrance d'ensemble de données (342), qui peut être reliée directement ou par l'intermédiaire d'un réseau de données à une unité d'interface de commande (310) d'un autre dispositif d'interface de données (300) selon l'une des revendications précédentes, afin de transmettre des ensembles de données générés par le système de traitement de données (330) à l'autre dispositif d'interface de données (300).

12. Dispositif d'interface de données selon l'une quelconque des revendications précédentes, **caractérisé en ce que**
l'unité d'interface de commande (310) présente une unité de réception d'ensemble de données (311), qui peut être reliée directement ou par l'intermédiaire d'un réseau de données à une unité de communication (340) d'un autre dispositif d'interface de données (300) selon l'une des revendications précédentes, afin de recevoir de l'autre dispositif d'interface de données (300) des ensembles de données générés par un système de traitement de données (330).

13. Dispositif d'interface de données selon l'une quelconque des revendications précédentes, **caractérisé en ce que**
l'unité de communication (340) est conçue pour recevoir des instructions de configuration d'un dispositif de traitement de données externe,
dans lequel le système de traitement de données (330) est conçu pour modifier les données de configuration mises en mémoire dans le système de mise en mémoire de données (350) et/ou pour mettre en mémoire de nouvelles données de configuration sur la base des instructions de configuration reçues par l'intermédiaire de l'unité de communication (340).

14. Dispositif d'interface de données selon l'une quelconque des revendications précédentes, **caractérisé en ce que**
le système de mise en mémoire de données (350) présente une interface de données (390), qui est conçue pour transmettre les données mises en mémoire dans le premier support de mémoire de données (370), aux fins de sécurisation de données et/ou de stockage à long terme, à un dispositif de mise en mémoire de données (800) relié de manière externe, en particulier selon une transmission de données ou sauvegarde en miroir synchrone, asynchrone, effectuée à intervalles réguliers ou effectuée lors d'un dépassement d'une valeur limite de la quantité de données mise en mémoire dans le premier support de mémoire de données ; et/ou
le dispositif de mise en mémoire de donnée externe est relié par l'intermédiaire d'un réseau local ou mondial et comprend un serveur de données externe, un serveur Web, une unité de courtier de message externe et/ou un autre dispositif d'interface de données selon l'une quelconque des revendications précédentes ou est un serveur de données externe, un serveur Web, une unité de courtier de message externe et/ou un autre dispositif d'interface de données (300) selon l'une quelconque des revendications précédentes.

15. Système avec un ou plusieurs dispositifs d'interface de données (300) selon l'une quelconque des revendications précédentes et un ou plusieurs systèmes de traitement de données externes (400, 500), qui sont reliés à une unité de communication (340) d'au moins un des dispositifs d'interface de données (300) par l'intermédiaire d'un réseau de données local ou mondial (600), dans lequel en particulier une unité de communication (340) d'au moins un des dispositifs d'interface de données (300) est reliée à une unité d'interface de commande (310) d'un autre dispositif d'interface de données par l'intermédiaire d'un réseau de données local ou mondial (600).
